# EUROPÄISCHE PATENTSCHRIFT

(11) **EP 3 374 618 B1**
(45) Veröffentlichungstag und Bekanntmachung des Hinweises auf die Patenterteilung: **01.04.2020**
(21) Anmeldenummer: 16794619.3
(22) Anmeldetag: 10.11.2016
(51) Int. Cl.: F02D 41/24

(54) **SYSTEM UND VERFAHREN ZUR KALIBRIERUNG EINER FAHRZEUGKOMPONENTE**
SYSTEM AND METHOD FOR CALIBRATING A VEHICLE COMPONENT
SYSTÈME ET PROCÉDÉ POUR ÉTALONNER UN COMPOSANT DE VÉHICULE

(30) Priorität: 10.11.2015 DE 102015014478
(43) Veröffentlichungstag der Anmeldung: 19.09.2018
(73) Patentinhaber: AVL List GmbH, 8020 Graz (AT)
(72) Erfinder: KASERER, Thomas, 8020 Graz (AT); DOBES, Thomas, 8010 Graz (AT); STORFER, Gerhard, 8020 Graz (AT); THAMERL, Stefan, 8020 Graz (AT); MUTSCHLER, Mark, 74076 Heilbronn (DE)
(74) Vertreter: Breuer Friedrich Hahner Patentanwälte PartG mbB
(86) Internationale Anmeldenummer: PCT/EP2016/077365
(87) Internationale Veröffentlichungsnummer: WO 2017/081215

(56) Entgegenhaltungen:
- WO-A1-2013/182681
- S Herzog ET AL: "Kalibrierdatenverwaltung: Ein Puzzlespiel?", Automobil Elektronik E/E-Entwicklung für Entscheider, 3. Juni 2015 (2015-06-03), Seiten 62-65, XP055340364, Gefunden im Internet: URL:http://www.automobil-elektronik.de/wp- content/uploads/sites/7/2015/06/AEL_5-6_20 15_Internet.pdf [gefunden am 2017-01-30]
- STEFAN PLATNER ET AL: "MODELLBASIERTE SERIEN-KALIBRIERUNG - DER EFFIZIENTE WEG FÜR VARIANTENENTWICKLUNG", MTZ, Nr. 10/2013, 1. Oktober 2013 (2013-10-01), Seiten 754-760, XP055082271,
- Kristian Jankov: "Beitrag zur automatisierten Steuerkennfeld-Applikation bei Fahrzeug-Dieselmotoren", , 28. August 2008 (2008-08-28), XP055036695, Gefunden im Internet: URL:http://opus.kobv.de/tuberlin/volltexte /2008/1972/pdf/jankov_kristian.pdf [gefunden am 2012-08-29]
- EL SALLOUM CHRISTIAN: "Seamless Integration of Test Information Management and Calibration Data Management in the Overall Automotive Development Process", 2015 IEEE 8TH INTERNATIONAL CONFERENCE ON SOFTWARE TESTING, VERIFICATION AND VALIDATION (ICST), IEEE, 13. April 2015 (2015-04-13), Seiten 1-3, XP032774752, DOI: 10.1109/ICST.2015.7102629 [gefunden am 2015-05-05]

## Beschreibung

Die Erfindung ein Verfahren und ein System zur Kalibrierung einer Steuerung einer Fahrzeugkomponente, insbesondere wenigstens eines Abschnitts eines Antriebsstrangs eines Kraftfahrzeugs. In der Steuerung sind hierbei Steuerdaten hinterlegt, auf deren Grundlage die Fahrzeugkomponente gesteuert wird.

Ein Beispiel für eine Fahrzeugkomponente ist die Brennkraftmaschine eines Kraftfahrzeugs. Während der Prüfphase bzw. Kalibrierungsphase (auch Applikationsphase genannt) einer solchen Brennkraftmaschine wird deren Steuerung für verschiedene mögliche Anwendungsfälle bzw. Betriebszustände mit Steuerdaten versehen und in einem gewöhnlich iterativen Prozess werden die hierfür möglichst optimalen Einstellungen aufgefunden. In diesem Kalibrierungsprozess sind im Allgemeinen Randbedingungen zu beachten, z.B. Emission, Verbrauch, Leistung, etc., welche Soll-Werte für Betriebsparameter der Brennkraftmaschine vorgeben.

Die verschiedenen Fahrzeugkomponenten eines modernen Kraftfahrzeugs werden üblicherweise mit elektronischen Steuerungen betrieben. Insbesondere wird die Brennkraftmaschine unter Verwendung einer solchen Steuerung gesteuert. Auch die Steuerung einer Elektromaschine oder, bei hybriden Antriebssträngen, einer Brennkraftmaschine in Kombination mit einer Elektromaschine sowie eines Fahrzeuggetriebes, wird üblicherweise mit einer solchen elektronischen Steuerung bewerkstelligt.

Zum Steuern dieser Fahrzeugkomponenten durch die jeweiligen elektronischen Steuerungen ist es üblicherweise erforderlich, in dem Steuergerät eine Vielzahl von für die Steuerung der jeweiligen Fahrzeugkomponente relevanten Steuerdaten in einem Speicher der Steuerung abzulegen. Beispielsweise können solche Steuerdaten für die Steuerung eines manuellen Schaltgetriebes oder eines Automatikgetriebes eine Schaltstrategie bereitstellen. Auch umfassen solche Steuerdaten im Allgemeinen Steuerbefehle, welche an die Fahrzeugkomponente bzw. Fahrzeugkomponenten übertragen werden, welche von der jeweiligen elektronischen Steuerung gesteuert werden.

Bei einer Brennkraftmaschine können mit solchen Steuerbefehlen beispielsweise die Injektoren der Brennkraftmaschine hinsichtlich der Menge des in den Brennraum der Brennkraftmaschine einzuspritzenden Kraftstoffs sowie des Zeitpunkts, zu welchem der Kraftstoff eingespritzt werden soll, gesteuert werden. Kraftstoffmenge und Einspritzzeitpunkt sind hierbei Steuerparameter der Brennkraftmaschine.

Im Folgenden wird die Erfindung in Bezug auf einen Antriebsstrang bzw. eine Brennkraftmaschine beschrieben. Die Erfindung ist jedoch auch bei allen anderen Fahrzeugkomponenten, welche mittels einer Steuerung betrieben werden, anwendbar.

Bei der Kalibrierung einer Steuerung, welche im Kraftfahrzeug zur Steuerung eines Antriebsstrangs bzw. der Brennkraftmaschine verwendet wird, erfolgt im Allgemeinen zunächst eine Erstbedatung der Steuerung anhand von Abschätzungen. Vorgaben, die Soll-Reaktionen der Fahrzeugkomponente bewirken sollen, werden hierbei eingangsseitigen Steuerdaten zugeordnet, die zu den entsprechenden Ist-Reaktionen führen sollen.

Eine Vorgabe, die zu einer erwünschten Soll-Reaktion einer Brennkraftmaschine führen soll, ist beispielsweise eine Gaspedalstellung unter Berücksichtigung einer aktuellen Drehzahl der Brennkraftmaschine. Die Reaktion des Kraftfahrzeugs ist in diesem Fall in der Regel eine Beschleunigung, insbesondere mit einem Schaltvorgang.

Abschätzungen und sich daraus ergebende Steuerdaten bzw. Steuerfunktionen in Bezug auf die Steuerparameter, die für eine sogenannte Erstbedatung einer Steuerung herangezogen werden, d.h. einer erstmaligen Beaufschlagung der Steuerung einer neu entwickelten Brennkraftmaschine mit Steuerdaten, beruhen dabei im Allgemeinen auf Erfahrungswerten von erfahrenen Testingenieuren, welche mit der Kalibrierung einer Brennkraftmaschine betraut sind und/oder auf Berechnungsmodellen in Bezug auf die neu entwickelte Brennkraftmaschine.

Somit hängt die Erstbedatung von der subjektiven Einschätzung des Testingenieurs bzw. der Testingenieure ab, insbesondere wie diese Auswirkungen einer Veränderung einer Konstruktion der Brennkraftmaschine oder von Randbedingungen, beispielsweise Emissionsgrenzwerten, Verbrauchsgrenzwerten, etc. in Bezug auf bereits bekannte Kalibrierungen von Brennkraftmaschine einschätzen.

Die WO 2013/131836 A3 betrifft ein Verfahren zur Optimierung von Verbrennungskraftmaschinen, insbesondere zur Emissions- und/oder Verbrauchsoptimierung, bei welchen über Korrekturfunktionen in ihren Steuergeräten in jedem Betriebspunkt gegebenenfalls zumindest eine der Nebeneinflussgrößen derart eingestellt wird, dass in einem definierten Zyklus in Betriebspunkten die Emissionsgrenzwerte eingehalten sind.

Die DE 10 2011 116 730 A1 betrifft ein Verfahren zur Bedatung eines Steuergeräts zum Steuern eines Antriebssystems eines Straßenkraftfahrzeugs, mit den Schritten: Erstbedatung des Steuergeräts anhand von Funktionen und/oder Abschätzungen, bei denen eingangsseitige Vorgaben, die am Kraftfahrzeug zu Soll-Reaktionen führen sollen, ausgangsseitige Steuersignale zugeordnet werden, die am Kraftfahrzeug zu Ist-Reaktionen führen; und Endbedatung der Steuergeräts anhand von Fahrversuchen, bei denen abhängig von den Vorgaben die Ist-Reaktionen des Kraftfahrzeugs gemessen und mit den Soll-Reaktionen verglichen werden, wobei im Falle einer zulässigen Soll-Ist-Abweichung eine Korrektur der zugehörigen Steuersignale erfolgt, derart, dass die Soll-Ist-Abweichung eliminiert oder zulässig wird.

Die DE 10 2013 003 493 A1 betrifft ein Verfahren zum Bedaten eines Steuergeräts eines Kraftfahrzeugs, umfassend die folgenden Schritte: Erstmaliges Bedaten des Steuergeräts mit einem ersten Steuergerät-Datensatz zur Steuerung des Steuergeräts; Aufzeichnen von Betriebsdaten im Steuergerät oder Durchführen von Fahrversuchen mit dem Kraftfahrzeug und dem darin verbauten Steuergerät, wobei das Steuergerät unter Verwendung des ersten Steuergerät-Datensatzes betrieben wird; erneutes Bedaten des Steuergeräts mit einem vom ersten Steuergerät-Datensatz wenigstens teilweise abweichenden zweiten Steuergerät-Datensatz; Simulation von Fahrversuchen im Steuergerät ohne Verwendung des Kraftfahrzeugs mit den aufgezeichneten Betriebsdaten, wobei das Steuergerät unter Verwendung des zweites Steuergerät-Datensatzes betrieben wird.

S. Herzog et al., "Kalibrierdatenverwaltung, ein Puzzlespiel?", Automobil-Elektronik, Hüthig Verlag, 2015 beschreibt ein Software-Werkzeug zum Bearbeiten von Parametersatzdateien, wobei bei einer Steuergerätekalibrierung entstandene Parameter sich anzeigen, gegenüberstellen und bearbeiten lassen. Wenn mehrere Applikateure im Team arbeiten, kann eine datenbankgestützte Anwendung für Applikationteams zum Einsatz kommen, wobei mit Hilfe von Arbeitspaketen und Berechtigungen das System Datenkonflikte vermeidet, Überschneidungen erkannt und Datenänderungen lückenlos verfolgt werden können. Das Ziel des Software-Werkzeugs ist es hierbei, auch eine große Anzahl von Varianten sicher beherrschbar zu machen. Des Weiteren können mittels des Software-Werkzeugs die Applikationsdaten grafisch dargestellt und verarbeitet werden. Das Ziel des Software-Werkzeugs ist es, konsistente Datenstände mit hoher Datenqualität, die sich mit Data-Mining und Report-Funktionen für weitere Qualitäts- und Effizienzsteigerung nutzen lassen, zu erzeugen.

Vor dem Hintergrund dieses Stands der Technik ist es eine Aufgabe der Erfindung, die Kalibrierung einer Fahrzeugkomponente bzw. einer Steuerung der Fahrzeugkomponente zu vereinfachen. Insbesondere ist es eine Aufgabe der Erfindung, bei der Kalibrierung einer Fahrzeugkomponente die Erstbedatung zu objektivieren, d.h. vorzugsweise möglichst unabhängig von der Einschätzung eines Testingenieurs möglichst allgemeingültig zu definieren.

Diese Aufgabe wird durch ein Verfahren zur Kalibrierung einer Steuerung einer Fahrzeugkomponente nach Ansprüchen 1 und 2 sowie ein System zur Kalibrierung einer Steuerung einer Fahrzeugkomponente nach Anspruch 16 gelöst. Vorteilhafte Ausgestaltungen werden in den Unteransprüchen beansprucht. Der Wortlaut der Ansprüche wird zum Inhalt der Beschreibung gemacht.

Ein erster Aspekt der Erfindung betrifft ein Verfahren zur Kalibrierung einer Steuerung einer Fahrzeugkomponente, insbesondere wenigstens eines Abschnitts eines Antriebsstrangs eines Kraftfahrzeugs, wobei in der Steuerung Steuerdaten hinterlegt sind, auf deren Grundlage die Fahrzeugkomponente gesteuert wird, und wobei das Verfahren vorzugsweise folgende Arbeitsschritte aufweist:
- Identifizieren wenigstens eines ersten Fahrzeugparameters aus einer Mehrzahl von Fahrzeugparametern kalibrierter Varianten der Fahrzeugkomponente, mit welcher für unterschiedliche kalibrierte Varianten verschieden ist;
- Prüfen, wenn sich die kalibrierten Varianten hinsichtlich des wenigstens einen ersten Fahrzeugparameters unterscheiden, wenigstens einen Teil der Steuerdaten der kalibrierten Variante auf eine Beziehung zu dem wenigstens einen identifizierten Fahrzeugparameter;
- Definieren, wenn eine Beziehung erkannt wird, einer Kalibrierungsfunktion für den wenigstens einen Teil der Steuerdaten auf der Grundlage der Beziehung zu dem identifizierten Fahrzeugparameter;
- Bestimmen von Steuerdaten einer zu kalibrierenden Variante der Fahrzeugkomponente anhand der Kalibrierungsfunktion; und
- Ausgeben der bestimmten Steuerdaten.

Eine Fahrzeugkomponente im Sinne der Erfindung ist ein Apparat, welcher in einem Fahrzeug verbaut werden kann. Insbesondere handelt es sich bei der Fahrzeugkomponente erfindungsgemäß um einen Abschnitt des Antriebsstrangs eines Kraftfahrzeugs oder den Antriebsstrang als Ganzes. Vorzugsweise ist die Fahrzeugkomponente eine Brennkraftmaschine, eine Elektromaschine und/oder das Getriebe des Kraftfahrzeugs.

Eine Steuerung im Sinne der Erfindung ist eine offene oder geschlossene Steuerung und dient zum Betrieb einer Fahrzeugkomponente. Bei einer geschlossenen Steuerung gehen Ist-Betriebsparameterwerte der Betriebszustände der Fahrzeugkomponente wieder als Eingangsparameter in die Einstellung eines Steuerungsparameters auf der Grundlage von Steuerdaten ein. Die Steuerung ist vorzugsweise Teil eines Steuergeräts der Fahrzeugkomponente, kann jedoch auch in einem anderen Steuergerät als Software oder Hardware implementiert sein.

Steuerdaten im Sinne der Erfindung enthalten eine Zuordnungsvorschrift zwischen Vorgaben bzw. Eingangsparametern der Steuerung und der einzelnen Steuerparameter zur Steuerung der Fahrzeugkomponente. Vorzugsweise hängt der Wert der Steuerparameter bei einer geschlossenen Steuerung, zusätzlich zur Vorgabe bzw. zum Eingangsparameter von wenigstens einem Betriebsparameter der Fahrzeugkomponente ab. Vorzugsweise sind die Steuerdaten in einer Tabelle oder als Steuerfunktion hinterlegt, wobei ein Wert eines Eingangsparameters ein Wert eines Steuerparameters zugeordnet ist.

Ein Fahrzeugparameter im Sinne der Erfindung ist eine charakterisierende Eigenschaft des Fahrzeugs oder der Fahrzeugkomponente, insbesondere eine Kenngröße, eine Kennzahl oder auch eine Typisierung. Vorzugsweise weist ein Fahrzeug oder eine Fahrzeugkomponente eine Vielzahl von verschiedenen Fahrzeugparametern auf, die das Fahrzeug oder die Fahrzeugkomponente charakterisieren.

Eine Mehrzahl im Sinne der Erfindung sind wenigstens zwei.

Eine Variante der Fahrzeugkomponente im Sinne der Erfindung ist eine Ausführung einer bestimmten Fahrzeugkomponente, welche sich von anderen Varianten bzw. Ausführungen durch die Veränderung wenigstens eines Fahrzeugparameters, insbesondere einer konstruktiven Eigenschaft oder einer Randbedingung, wie beispielsweise der Nennleistung, unterscheidet.

Eine Variante ist vorzugsweise ein Derivat der Fahrzeugkomponente. Insbesondere beruhen alle Varianten bzw. Derivate der Fahrzeugkomponente auf ein und derselben Grundausführung.

Eine Beziehung im Sinne der Erfindung ist eine Korrelation zwischen zwei Parametern. Insbesondere enthält eine Beziehung eine Zuordnung, welche den Wert eines ersten Parameters mit einem Wert eines zweiten Parameters in Beziehung setzt. Eine solche Beziehung kann insbesondere als Funktion ausgedrückt werden.

Eine Kalibrierungsfunktion im Sinne der Erfindung ist eine Zuordnungsvorschrift, welche wenigstens einem Teil der Steuerdaten einen Wert in Abhängigkeit des Werts wenigstens eines Fahrzeugparameters zuordnet.

Ein Fahrzeug im Sinne der Erfindung ist jede Art von Land-, Wasser-, Luft- oder Raumfahrzeug. Ein Kraftfahrzeug im Sinne der Erfindung ist ein durch Maschinenkraft betriebenes Fahrzeug, insbesondere ein Personenkraftwagen, Lastkraftwagen, Motorrad, Motorboot etc.

Die Erfindung beruht insbesondere auf der Erkenntnis, dass bei Varianten derselben Fahrzeugkomponente, welche jeweils in Fahrzeugen für verschiedene Märkte oder Fahrzeugtypen verbaut sind, ein Großteil der Steuerdaten gleich ist. D.h., die Werte eines oder mehrerer Steuerparameter für Werte der Eingangsparameter bei den Varianten sind gleich oder variieren lediglich auf der Grundlage einer relativ einfachen Beziehung zu den Eigenschaften der Varianten. Das erfindungsgemäße Verfahren ermöglicht es, solche Beziehungen zwischen den Fahrzeugparametern, welche die Eigenschaften der Varianten charakterisieren, und den Steuerdaten der Fahrzeugkomponente bei bestehenden, bereits kalibrierten Varianten festzustellen. Diese Beziehungen werden nachfolgend benutzt, um eine Kalibrierungsfunktion bzw. Kalibrierungsregel aufzustellen, mit welchem ein Teil der Steuerdaten, d.h. ein Teil der Steuerparameter der Fahrzeugkomponente mit einer Erstbedatung versehen werden kann.

Im Falle einer modernen Brennkraftmaschine, welche eine Vielzahl von Steuerparametern aufweist, kann hierdurch ein Großteil der Steuerdaten der Steuerung in der Weise mit einer Erstbedatung beaufschlagt werden, dass eine neue Variante der Brennkraftmaschine stabil betrieben werden kann.

Insbesondere moderne Brennkraftmaschinen weisen aufgrund der hohen Anzahl von Steuerparametern und Betriebsparametern eine hohe Komplexität auf, die für einen Menschen mit allen Abhängigkeiten nur schwer zu erfassen ist. Das erfindungsgemäße Verfahren bietet hierbei eine Möglichkeit, die Zusammenhänge zwischen den einzelnen Parametern für den Menschen erkennbar zu machen.

Eine erfindungsgemäß durchgeführte Erstbedatung kann eine Erstbedatung durch erfahrene Testingenieure ersetzen oder korrigieren. Daher kann eine Erstbedatung einer neuen Varianten der Brennkraftmaschine durch einen weniger erfahrenen Ingenieur oder sogar einen Techniker auf der Grundlage bereits kalibrierter Varianten durchgeführt werden. Arbeitszeit von hochqualifizierten Fachkräften kann somit eingespart werden. Hierdurch wird einerseits die Produktivität bei der Entwicklung von Brennkraftmaschinen gesteigert und andererseits werden die Kosten gesenkt. Weiter wird die Erstbedatung von der Einschätzung eines Testingenieurs entkoppelt, d.h. unabhängig von subjektiven menschlichen Betrachtungen gemacht, welche oftmals zu falschen Bedatungen führen.

Insbesondere bei der in der Fahrzeugindustrie weitverbreiteten Plattformtechnologie, bei welcher die einzelnen Modelle einer Plattform unterschiedliche Varianten bzw. Derivate der jeweiligen Fahrzeugkomponenten aufweisen, können Arbeitszeit und Kosten bei der Entwicklung und Kalibrierung der Fahrzeugkomponente eingespart werden. Schließlich lässt sich durch die relativ hohe Aussagekraft der Erstbedatung mit dem erfindungsgemäßen Kalibrierungsverfahren wertvolle Prüfzeit bei der Kalibrierung der Fahrzeugkomponenten einsparen und im Falle von Brennkraftmaschinen können sogar irreversible Schäden am Prototyp aufgrund einer falschen Erstbedatung durch Testingenieure vermieden werden.

Das erfindungsgemäße Verfahren zur Kalibrierung der Steuerung einer Fahrzeugkomponente lässt sich daher im Wesentlichen in zwei Teile gliedern: In einem ersten Teil wird eine allgemeingültige Kalibrierungsfunktion für alle Varianten der Fahrzeugkomponente auf der Grundlage von bereits kalibrierten Varianten bestimmt. In einem zweiten Schritt werden Steuerdaten für eine zu kalibrierende Variante der Fahrzeugkomponente mittels der Kalibrierungsfunktion bestimmt.

Ein wesentlicher Unterschied der Erfindung gegenüber dem Stand liegt darin, dass zur automatisierten Kalibrierung bzw. Bedatung von Steuerungen von Fahrzeugkomponenten keine festen, vordefinierten Regeln zur Anwendung kommen müssen. Die Erfindung folgt vielmehr einem sogenannten Datamining-Ansatz, wobei Kalibrierungsfunktionen flexibel für jeden Anwendungsfall, insbesondere für die gleiche Fahrzeugkomponente verschiedener Fahrzeuge, auf den Anwendungsfall zugeschnitten generiert werden. Dies ist insbesondere von Vorteil, da für ein Fahrzeug bzw. eine Fahrzeugplattform heutzutage zum Teil mehrere Tausend Varianten existieren, welche sich bezüglich der jeweiligen Eigenschaften bzw. Attribute unterscheiden und Bedatet werden müssen. Auch bei dem sogenannten Variantenmanagement ist dies von Vorteil, da mittels der Erfindung erkannt werden kann, welche Steuerdaten von Varianten verändert werden sollten, wenn Änderungen in anderen Varianten verändert werden.

Ein zweiter Aspekt der Erfindung betrifft ein Verfahren zur Kalibrierung einer Steuerung einer Fahrzeugkomponente, insbesondere wenigstens eines Abschnitts eines Antriebsstrangs eines Fahrzeugs, wobei in der Steuerung Steuerdaten hinterlegt sind, auf deren Grundlage die Fahrzeugkomponente gesteuert wird, und wobei das Verfahren vorzugsweise folgende Arbeitsschritte aufweist:
- Identifizieren wenigstens eines ersten Fahrzeugparameters aus einer Mehrzahl an Fahrzeugparametern kalibrierter Varianten der Fahrzeugkomponente, welcher für unterschiedliche kalibrierte Varianten verschieden ist;
- Prüfen, wenn sich die kalibrierten Varianten hinsichtlich des wenigstens einen ersten Fahrzeugparameters unterscheiden, wenigstens eines Teils des Steuerdaten der kalibrierten Varianten auf eine Beziehung zu dem wenigstens einen identifizierten, ersten Fahrzeugparameter;
- Definieren, wenn eine Beziehung erkannt wird, einer Kalibrierungsfunktion für den wenigstens einen Teil der Steuerdaten auf der Grundlage der Beziehung zu den identifizierten Steuerparametern; und
- Ausgeben der Kalibrierungsfunktion.

In einer vorteilhaften Ausgestaltung des Verfahrens zur Kalibrierung, insbesondere nach dem ersten oder zweiten Aspekt der Erfindung, werden beim Prüfen auf eine Beziehung zwischen dem wenigstens einen Teil der Steuerdaten und dem wenigstens einen ersten Fahrzeugparameter gleiche Werte jeweils eines Steuerparameters der Steuerdaten der unterschiedlichen kalibrierten Varianten einem Cluster zugeordnet, wobei die Beziehung zu dem wenigstens einen ersten Fahrzeugparameter anhand der Cluster geprüft wird. Durch die Clusterung können bestehende Beziehungen, insbesondere Gleichbedatungen, leichter identifiziert werden.

Ein dritter Aspekt der Erfindung betrifft ein Verfahren zur Kalibrierung einer Steuerung einer Fahrzeugkomponente, insbesondere wenigstens eine Abschnitts eines Antriebsstrangs eines Fahrzeugs, wobei in der Steuerung Steuerdaten hinterlegt sind, auf deren Grundlage die Fahrzeugkomponente gesteuert wird, wobei mehrere Varianten der Fahrzeugkomponente existieren, welche sich durch wenigstens einen Fahrzeugparameter unterscheiden, und wobei das Verfahren vorzugsweise folgende Arbeitsschritte aufweist:
- Bestimmen von Steuerdaten einer zu kalibrierenden Variante der Fahrzeugkomponente anhand einer Kalibrierungsfunktion zwischen Steuerfunktion und dem wenigstens einen Fahrzeugparameter, wobei die Kalibrierungsfunktion auf einer Beziehung zwischen wenigstens einem Teil von Steuerdaten einer Mehrzahl bereits kalibrierter Varianten der Fahrzeugkomponente und dem wenigstens einen Fahrzeugparameter beruht; und
- Ausgeben der bestimmten Steuerdaten.

In einer vorteilhaften Ausgestaltung weist das erfindungsgemäße Verfahren, insbesondere nach dem ersten Aspekt oder dem dritten Aspekt der Erfindung, des Weiteren den Arbeitsschritt des Bedatens der Steuerung der zu kalibrierenden Variante der Fahrzeugkomponente mit der Kalibrierungsfunktion und/oder den bestimmten Steuerdaten auf.

Ein vierter Aspekt der Erfindung betrifft ein Verfahren zur Kalibrierung einer Steuerung einer Fahrzeugkomponente, insbesondere wenigstens eines Abschnitts eines Antriebsstrangs eines Fahrzeugs, wobei in der Steuerung Steuerdaten hinterlegt sind, auf deren Grundlage die Fahrzeugkomponente gesteuert wird, und wobei das Verfahren folgende Arbeitsschritte aufweist:
- Identifizieren wenigstens eines ersten Fahrzeugparameters aus einer Mehrzahl von Fahrzeugparametern bedateter Varianten der Fahrzeugkomponente, wobei der erste Fahrzeugparameter für die bedateten Varianten verschieden ist;
- Prüfen, wenn sich die bedateten Varianten hinsichtlich des wenigstens einen ersten Fahrzeugparameters unterscheiden, wenigstens eines Teils der Steuerdaten der bedateten Varianten auf eine Beziehung zu dem wenigstens einen identifizierten Fahrzeugparameter;
- Definieren, wenn eine Beziehung erkannt wird, einer Kalibrierungsfunktion der wenigstens eines Teils der Steuerdaten auf der Grundlage der Beziehung zu dem identifizierten Fahrzeugparameter;
- Überprüfen von Steuerdaten einer bereits bedateten zu kalibrierenden Variante der Fahrzeugkomponente auf der Grundlage der Kalibrierungsfunktion; und
- Ausgeben, wenn eine Abweichung der überprüften Steuerdaten von der Kalibrierungsfunktion vorliegt, eines Hinweises auf die Abweichung.

In dieser alternativen Ausgestaltung des erfindungsgemäßen Verfahrens können Abweichungen, insbesondere manuell bedateter Varianten von Fahrzeugkomponente festgestellt werden. Hierbei werden die bereits bedateten Komponenten analysiert und auf mögliche Beziehungen untersucht. Weicht beispielsweise nur eine einzige Variante von einer möglichen Beziehung ab, so wird diese Abweichung als Fehler, insbesondere als Eingabefehler durch den Testingenieur, klassifiziert und vorzugsweise auch ausgegeben. Durch diese Alternative des erfindungsgemäßen Verfahrens können neu erstellte Steuerdaten validiert werden und ungewollte Datenunterschiede vermieden oder notwendige Unterschiede überwacht werden. Insbesondere können Probleme beim Betrieb einer Brennkraftmaschine mit einer Erstbedatung vermieden werden.

Im Weiteren werden vorteilhafte Ausgestaltungen des erfindungsgemäßen Verfahrens beschrieben, die jeweils mit allen Aspekten der Erfindung und miteinander kombiniert werden können, soweit dies nicht ausdrücklich ausgeschlossen wird.

In einer vorteilhaften Ausgestaltung wird für jenen Teil der Steuerdaten, für welchen keine Beziehung zu wenigstens einem Fahrzeugparameter erkannt wurde, keine Kalibrierungsfunktion erstellt.

Dieser andere Teil der Steuerdaten sollte daher vorzugsweise manuell durch die jeweiligen Testingenieure bedatet werden. Eine automatisierte Bedatung könnte, je nach Steuerparameter, eine Beschädigung der Fahrzeugkomponente hervorrufen.

In einer weiteren vorteilhaften Ausgestaltung können wobei unterschiedliche Steuerparameter unterschiedliche Kalibrierungsfunktionen in Bezug auf den wenigstens einen Fahrzeugparameter und/oder unterschiedliche Kalibrierungsfunktionen in Bezug auf jeweils unterschiedliche Fahrzeugparameter aufweisen.

Hierdurch wird gewährleistet, dass ein möglichst großer Teil der Steuerdaten automatisiert bedatet werden kann.

In einer weiteren vorteilhaften Ausgestaltung weist das erfindungsgemäße Verfahren, insbesondere nach dem vierten Aspekt der Erfindung, den weiteren Arbeitsschritt des Korrigierens der Abweichung der überprüften Steuerdaten von der Kalibrierungsfunktion in der Steuerung der zu kalibrierenden Variante auf.

In einer weiteren vorteilhaften Ausgestaltung weist das erfindungsgemäße Verfahren des Weiteren die folgenden Arbeitsschritte auf:
- Durchführen wenigstens eines Prüfstandsversuchs mit der bedateten, zu kalibrierenden Fahrzeugkomponente oder wenigstens eines Versuchs mit einem Fahrzeug mit der bedateten, zu kalibrierenden Fahrzeugkomponente;
- Vergleichen von Ist-Werten von Betriebsparametern der Fahrzeugkomponente mit Soll-Werten; und
- erneutes Bedaten der Steuerung der zu kalibrierenden Fahrzeugkomponente auf der Grundlage von Abweichungen zwischen den Ist-Werten und den Soll-Werten der Betriebsparameter der Fahrzeugkomponente.

Eine vollständige Kalibrierung einer Fahrzeugkomponente ist vorzugsweise nur durch weitere Prüfstandsversuche mit der Fahrzeugkomponente oder durch reale Betriebstests im Einsatz im Fahrzeug möglich. Alternativ oder zusätzlich können auch Simulationsversuche, beispielsweise mit HIL-Versuchen (Hardware-in-the-Loop) durchgeführt werden. Durch das erfindungsgemäße Verfahren können diese Versuche mit einer neuen, zu kalibrierenden Fahrzeugkomponente wesentlich verkürzt werden.

In einer weiteren vorteilhaften Ausgestaltung des erfindungsgemäßen Verfahrens ist die Fahrzeugkomponente einer Brennkraftmaschine und der wenigstens eine Fahrzeugparameter aus der folgenden Gruppe ausgewählt: Nennleistung, Marktspezifikation, Emission, Verbrauch, Fahrbarkeit und Fahrzeugtyp.

In einer weiteren vorteilhaften Ausgestaltung des erfindungsgemäßen Verfahrens ist die Fahrzeugkomponente vorzugsweise eine Brennkraftmaschine und die Steuerdaten betreffen wenigstens einen Steuerparameter aus der folgenden Gruppe: Lambdaregelung, Logistikdaten, Scavenging, Katalysatorheizen, Tankleckdiagnose, Pedalkennfeld, Lastschalldämpfung, Drehzahl, Einspritzbeginn, Tropfendurchmesser, Sauerstoffkonzentration, Einspritzdauer, AGR-Rate, Zündverzug und/oder Verbrennungsschwerpunkt.

In einer weiteren vorteilhaften Ausgestaltung des erfindungsgemäßen Verfahrens ist die Beziehung zwischen dem ersten Fahrzeugparameter und den Steuerdaten eine Gleichheit eines Steuerparameters der Steuerdaten für gleiche Werte oder Ausprägungen wenigstens eines zweiten Fahrzeugparameters, eine lineare Abhängigkeit eines Steuerparameters der Steuerdaten von dem wenigstens einen Fahrzeugparameter für gleiche Werte oder Ausprägungen wenigstens eines zweiten Fahrzeugparameters, eine polynomiale Abhängigkeit eines Steuerparameters der Steuerdaten von dem wenigstens einen ersten Fahrzeugparameter für gleiche Werte oder Ausprägung wenigstens eines zweiten Fahrzeugparameter und/oder eine statistische Abhängigkeit eines Steuerparameters der Steuerdaten von wenigstens einem ersten Fahrzeugparameter für gleiche Werte oder Ausprägung wenigstens eines zweiten Fahrzeugparameters.

In einer weiteren vorteilhaften Ausgestaltung des erfindungsgemäßen Verfahrens gilt die Beziehung zwischen dem wenigstens einen ersten Steuerparameter und den Steuerdaten für wenigstens zwei Gruppen von Varianten mit jeweils gleichen Werten oder Ausprägung des wenigstens eines ersten Fahrzeugparameters und jeweils unterschiedlichen Werten oder Ausprägung des wenigstens einen zweiten Fahrzeugparameters, wobei eine erste Gruppe im Vergleich zu einer zweiten Gruppe unterschiedliche Werte oder Ausprägungen des wenigstens einen ersten Fahrzeugparameters und gleiche Werte oder Ausprägung des wenigstens einen zweiten Fahrzeugparameters aufweist. Eine Gruppe weist hierbei wenigstens zwei Varianten auf.

Die im Vorhergehenden beschriebenen Merkmale und die dazugehörigen Vorteile in Bezug auf die Aspekte eines erfindungsgemäßen Verfahren gelten für die nachfolgend beschriebenen Aspekte des erfindungsgemäßen Systems entsprechend und umgekehrt.

Ein fünfter Aspekt der Erfindung betrifft ein System zur Kalibrierung einer Steuerung einer Fahrzeugkomponente, insbesondere wenigstens einen Abschnitt des Antriebsstrangs. Vorzugsweise sind in der Steuerung Steuerdaten hinterlegt, auf deren Grundlage die Fahrzeugkomponente gesteuert wird. Das System weist hierbei vorzugsweise eine erste Schnittstelle zum Einlesen von Steuerdaten einer Mehrzahl von Fahrzeugparametern kalibrierter Varianten der Fahrzeugkomponente und von Fahrzeugparametern wenigstens einer zu kalibrierenden Variante auf. Des Weiteren weist das System vorzugsweise eine Recheneinheit auf, welche eingerichtet ist zum Identifizieren wenigstens eines ersten Fahrzeugparameters, vorzugsweise einer Nennleistung, eines Emissionswerts und/oder eine Marktspezifikation, insbesondere EU, USA, JP, einer Mehrzahl von Fahrzeugparameter, kalibrierten Varianten der Fahrzeugkomponente, wobei der erste Fahrzeugparameter für unterschiedliche Varianten verschieden ist. Vorzugsweise ist die Recheneinheit des Weiteren eingerichtet zum Prüfen wenigstens eines Teils der Steuerdaten der kalibrierten Varianten auf eine Beziehung zu den wenigstens einem ersten Fahrzeugparameter und zum Definieren einer Kalibrierungsfunktion für wenigstens einen Teil der Steuerdaten auf der Grundlage der Beziehung zu dem ersten Fahrzeugparameter. Des Weiteren vorzugsweise ist die Recheneinheit eingerichtet zum Bestimmen von Steuerdaten einer zu kalibrierenden Variante der Fahrzeugkomponente anhand der Kalibrierungsfunktion. Das System weist des Weiteren vorzugsweise eine zweite Schnittstelle zum Ausgeben der bestimmten Steuerdaten, insbesondere an die Steuerung der Fahrzeugkomponente, auf.

In einer vorteilhaften Ausgestaltung des erfindungsgemäßen Systems zur Kalibrierung einer Steuerung der Fahrzeugkomponente ist die weitere Schnittstelle des Weiteren eingerichtet, die Steuerdaten in die Steuerung einzuschreiben.

Das erfindungsgemäße System ist vorzugsweise auf der Grundlage einer üblichen Datenverarbeitungseinrichtung realisiert, welche über geeignete Rechenleistungen und Speicherkapazität verfügt. Die erfindungsgemäße Recheneinheit und die Schnittstellen können hierbei sowohl als Hardware als auch durch Softwaremodule implementiert sein.

Weitere Merkmale, Vorteile und Anwendungsmöglichkeiten der Erfindung ergeben sich aus der nachfolgenden Beschreibung in Zusammenhang mit den Figuren.

Es zeigt wenigstens teilweise schematisch:
- **Figur 1**: ein Blockdiagramm des Verfahrens zur Kalibrierung einer Fahrzeugkomponente gemäß dem ersten Aspekt der Erfindung;
- **Figur 2**: einen beispielhaften Datensatz eines Projekts mit sechs Varianten einer Fahrzeugkomponente;
- **Figur 3**: eine Tabelle mit dem beispielhaften Datensatz aus Fig. 2 sowie einer Erstbedatung weiterer Varianten der Fahrzeugkomponente des Projekts;
- **Figur 4**: ein Blockdiagramm eines Verfahrens zur Kalibrierung einer Steuerung einer Fahrzeugkomponente gemäß dem vierten Aspekt der Erfindung; und
- **Figur 5**: eine Tabelle mit dem Datensatz der Fig. 2 und zwei weiteren bereits kalibrierten Varianten der Fahrzeugkomponente des Projekts, deren Bedatung überprüft wird.

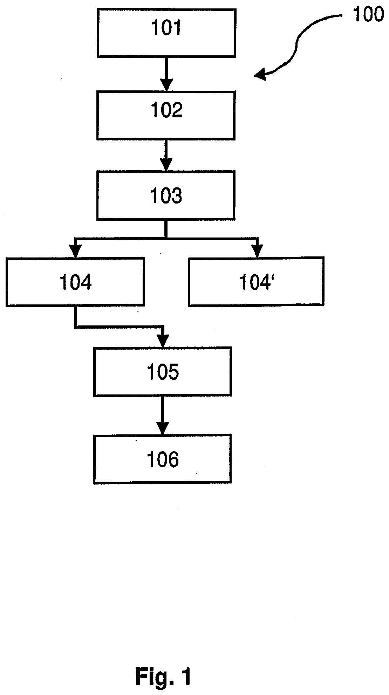

Anhand der **Fig. 1** bis **Fig. 3** wird eine Ausführungsform des ersten bis dritten Aspekts der Erfindung im Folgenden erläutert.

Das erfindungsgemäße Verfahren 100, 200 wird dabei beispielhaft in Bezug auf eine Anwendung bei Brennkraftmaschinen beschrieben. Die Erfindung ist jedoch nicht auf diese Anwendung beschränkt und kann bei jeder anderen Fahrzeugkomponente zum Einsatz kommen.

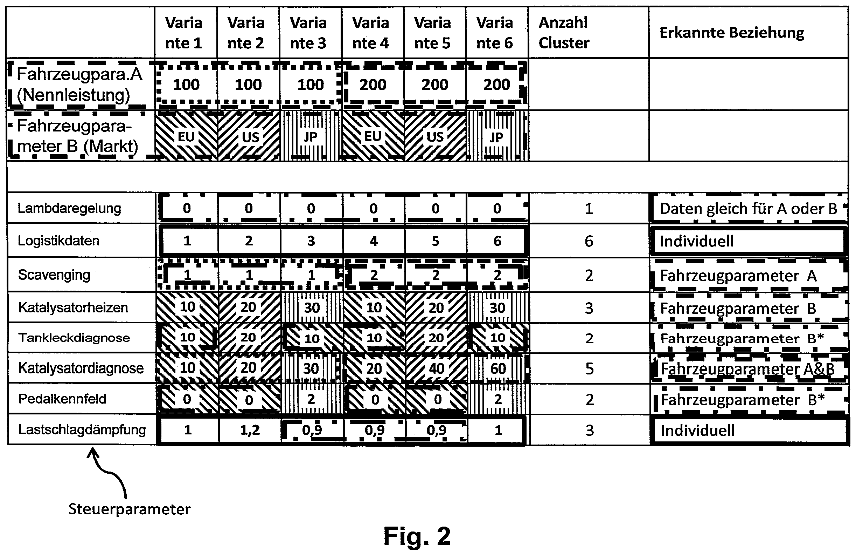

**Fig. 2** stellt einen Datensatz mit Steuerdaten von sechs Varianten eines Projekts einer bestimmten Brennkraftmaschine dar. Diesbezüglich kann auch von einer sogenannten Motorenfamilie gesprochen werden. Die einzelnen Varianten des Projekts unterscheiden sich in den Varianten 1 bis 6 durch die Nennleistung und die Marktspezifikation. Diese beiden Eigenschaften, auch Attribute genannt, bzw. Ausprägungen der einzelnen Varianten stellen somit die Fahrzeugparameter A und B in Bezug auf die Varianten 1 bis 6 dar. Je nachdem, welche Nennleistung das (Kraft-)Fahrzeug haben soll und in welchem Markt dieses vertrieben werden soll, müssen die Steuerdaten der jeweiligen Motorsteuerung der einzelnen Varianten der Brennkraftmaschine angepasst werden, um die Leistungsvorgaben und die gesetzlichen Vorgaben zu erfüllen.

Die Werte der Kalibrierung der Varianten 1 bis 6 werden an einem Prüfstand oder im Prüfbetrieb eines Kraftfahrzeugs validiert, so dass die einzelnen Varianten bezüglich ihrer jeweiligen realen Steuerdaten als kalibriert anzusehen sind.

Die einzelnen in diesem Datensatz betrachteten Steuerparameter der Steuerdaten sind die Lambdaregelung, die Logistikdaten, das Scavenging, das Katalysatorheizen, die Tankleckdiagnose, die Katalysatordiagnose, das Pedalkennfeld und die Lastschlagdämpfung.

Auch wenn in der Tabelle die Einträge bei den einzelnen Steuerparametern in Bezug auf die Varianten als einzelne Zahlenwerte dargestellt sind, so handelt es sich hierbei üblicherweise um Kennfelder, welche die Abhängigkeit des jeweiligen Steuerparameters von einer Vielzahl von Eingangsparametern angibt. Der Übersichtlichkeit halber sind im vorliegenden Fall, stellvertretend für mögliche hinterlegte Kennfelder, einzelne Zahlenwerte dargestellt.

Die Anzahl der Fahrzeugparameter ist nicht auf die hier genannten Fahrzeugparameter A und B beschränkt und kann weitere Fahrzeugparameter wie beispielsweise den Verbrauchswert, den Emissionswert für verschiedene Gase, die Fahrbarkeitsbewertung oder auch den Fahrzeugtyp und weitere umfassen. Auch die Steuerparameter sind nicht auf den in Fig. 2 genannten Steuerparameter beschränkt und weitere Steuerparameter wie die Drehzahl, den Einspritzbeginn des Kraftstoffs, den Tropfendurchmesser des Kraftstoffs, die Sauerstoffkonzentration, die Einspritzdauer, die AGR-Rate, der Zündverzug, der Verbrennungsschwerpunkt und/oder der Saugrohrunterdruck können beispielhaft in dem Datensatz enthalten sein.

Zunächst wird bei dem erfindungsgemäßen Verfahren jener Fahrzeugparameter bzw. jene Fahrzeugparameter identifiziert, deren Werte sich zwischen den einzelnen Varianten unterscheiden 101, 201. Dies ist nötig, da eine Abhängigkeit der Steuerparameter zwischen Varianten vorzugsweise nur dann gegeben sein kann, wenn diese sich durch wenigstens einen Fahrzeugparameter unterscheiden. Da die Varianten jedoch vorzugsweise durch einen Satz von Werten der verschiedenen Fahrzeugparameter charakterisiert sind, müssen diese daher in einem Wert eines Fahrzeugparameters verschieden sein. Unter einem Wert wird hierbei eine Zahl oder auch eine Bezeichnung oder Kennzeichnung verstanden.

Hierauf wird eine sogenannte Clusterung des in Fig. 2 gezeigten Datensatzes vorgenommen. Insbesondere werden jene Werte eines Steuerparameters identifiziert, welche für verschiedene Varianten gleich oder wenigstens ähnlich sind. Die Anzahl der Cluster in Fig. 2 entspricht hierbei der Anzahl an Einträgen mit verschiedenen Werten für den jeweiligen Steuerparameter. Übertragen auf Kennfelder wären dies verschiedene Bedatungen von Kennfeldern. Beispielsweise existieren in Bezug auf den Steuerparameter Tankleckdiagnose in Fig. 2 zwei Cluster, wobei der erste Cluster die gestrichelt umrahmten Werte 10 aufweist und der zweite Cluster die Werte 20 aufweist. In Bezug auf den Steuerparameter Katalysatordiagnose sind in Fig. 2 fünf Cluster vorhanden, wobei jeder Eintrag einer Variante in dem Datenfeld einen eigenen Cluster darstellt, bis auf die Einträge zur Variante 2 und 4, welche beide den Wert 20 aufweisen.

Anhand dieser Cluster wird geprüft, ob eine Beziehung zwischen Steuerdaten des Datensatzes der kalibrierten Varianten 1 bis 6 und wenigstens einem der Fahrzeugparameter Nennleistung (A) oder Marktspezifizierung (B) besteht 102, 202.

Aus dem in Fig. 2 dargestellten Datensatz wurden folgende Beziehungen erkannt, welche in der rechten Spalte der Tabelle aufgeführt sind: In Bezug auf den Steuerparameter Lambdaregelung sind alle Werte zu den Varianten gleich, nämlich gleich null. Daher ergibt sich eine konstante Abhängigkeit sowohl von dem Fahrzeugparameter Nennleistung (A) als auch von dem Fahrzeugparameter Marktspezifizierung (B).

Für den Steuerparameter Logistikdaten ist weder ein Cluster erkannt worden, noch ein Muster, aufgrund welchem eine Beziehung zwischen einem der Fahrzeugparameter und den jeweiligen Werten in Bezug auf die Varianten der Logistikdaten hergestellt werden könnte. Es handelt sich daher um eine für jede Variante individuelle Beziehung zwischen den Logistikdaten und den Fahrzeugparametern.

Für den Steuerparameter Scavenging liegen in Bezug auf die sechs kalibrierten Varianten zwei Cluster vor. Bei genauerer Betrachtungsweise ergibt sich, dass die Clusterung genau der Abstufung des Fahrzeugparameters Nennleistung (A) zwischen den Werten 100 und 200 entspricht. Daher ergibt sich eine Abhängigkeit des Steuerparameters Scavenging von dem Fahrzeugparameter Nennleistung (A).

Für den Steuerparameter Katalysatorheizen wurden in der Fig. 2 drei Cluster erkannt, ein Cluster mit den Werten 10, ein Cluster mit den Werten 20 und ein Cluster mit den Werten 30. Bei genauerer Analyse ist ersichtlich, dass die Cluster genau dem Fahrzeugparameter Marktspezifikation (B) entsprechen. Für den Wert EU des Fahrzeugparameters Marktspezifikation (B) weist der Steuerparameter Katalysatorheizen jeweils den Wert 10 auf, für den Wert US weist der Steuerparameter Katalysatorheizen jeweils den Wert 20 auf und für den Wert JP weist der Steuerparameter Katalysatorheizen jeweils den Wert 30 auf. Daher ergibt sich eine Beziehung zu dem Fahrzeugparameter Marktspezifikation (B).

In Bezug auf den Steuerparameter Tankleckdiagnose wurden zwei Cluster identifiziert. Bei genauerer Analyse ist ersichtlich, dass sich aus den Werten das Muster einer Abhängigkeit zu dem Fahrzeugparameter Marktspezifikation (B) ergibt. Da zwischen den Werten EU und JP des Fahrzeugparameter Marktspezifikation (B) nur unter Hinzunahme des Fahrzeugparameter Nennleistung (A) unterschieden werden kann, ist die Abhängigkeit hierbei mit B* bezeichnet.

In Bezug auf den Steuerparameter Katalysatordiagnose ergab die Analyse der Clusterung in Fig. 2 fünf Cluster, wie bereits erläutert. Bei genauerer Analyse stellt sich heraus, dass zwar eine Abhängigkeit dieses Steuerparameters vorliegt, dass diese Abhängigkeit aber sowohl von dem Fahrzeugparameter Nennleistung (A) als auch von dem Fahrzeugparameter Marktspezifikation (B) abhängt. So werden in diesem Fall bei gleichem Fahrzeugparameter Marktspezifikation (B) verschiedener Varianten die Werte jeweils verdoppelt, wenn die Nennleistung um 100 erhöht wird.

Die Analyse der Werte des Steuerparameters Pedalkennfeld ergab zwei Cluster. Auch hierbei handelt es sich um eine Abhängigkeit von dem Fahrzeugparameter Marktspezifikation (B), wobei auch hier die Werte des Steuerparameter nur eindeutig für die Werte EU und US identifiziert werden können, wenn der Fahrzeugparameter (A) hinzugezogen wird. Daher handelt es sich ebenfalls um eine Abhängigkeit B* von dem Fahrzeugparameter Marktspezifikation (B).

Für den Steuerparameter Lastschlagdämpfung ergab sich zwar eine Clusterung mit drei Clustern, allerdings wurde kein Muster erkannt, so dass lediglich eine individuelle Beziehung zwischen den einzelnen Werten der Varianten und der Werte des Steuerparameters vorliegt.

Die verschiedenen Arten von erkannten Beziehungen sind in Fig. 2 mit verschieden gestrichelten Umrandungen der einzelnen Felder dargestellt. Eine durchgezogene Umrandung bedeutet eine individuelle Beziehung. Abhängigkeiten von dem Fahrzeugparameter Nennleistung (A) werden durch zwei verschieden gestrichelte Umrandungen um den jeweiligen Cluster dargestellt, die Abhängigkeiten von dem Fahrzeugparameter Marktspezifikation (B) werden durch verschiedene Schraffierungen der Felder dargestellt. Datengleichheit in Bezug auf beide Fahrzeugparameter A und B wird durch eine gesondert gestrichelte Umrandung mit zwei Punkten noch einmal zusätzlich gekennzeichnet.

Auf der Grundlage dieser erkannten Beziehungen kann ein Kalibrierungsfunktion für den wenigstens einen analysierten Teil des Steuerdatensatzes der kalibrierten Varianten definiert werden 103, 203. Für jenen Teil der Steuerdaten, für welchen keine Beziehung erkannt wird, wird vorzugsweise auch keine Kalibrierungsfunktion erstellt. Die Steuerdaten sollten vorzugsweise in diesem anderen Teil von Testingenieuren manuell vervollständigt werden.

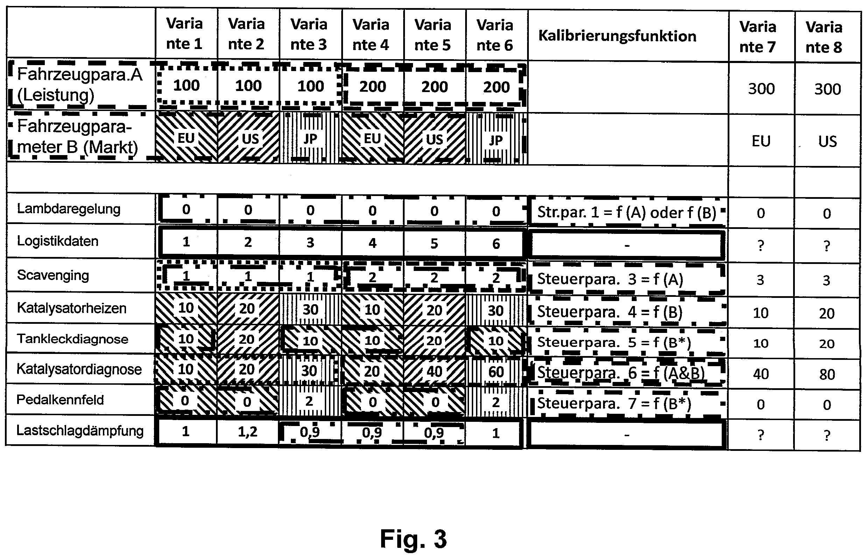

**In** **Fig. 3** sind in der Spalte Kalibrierungsfunktion jeweils die Kalibrierungsfunktionen für die einzelnen Steuerparameter von Lambdaregelung bis Lastschlagdämpfung, soweit vorhanden, angegeben. Diese Funktionen können vorzugsweise in einer gemeinsamen Gesamtfunktion zusammengefasst werden. Hierbei ist jegliche Art von mathematischer Funktion möglich, beispielsweise auch Boolsche Funktionen oder statistische Funktionen, welche statistische Aussagen über den Datensatz ermöglichen. Bei dem Steuerparameter Lambdaregelung handelt es sich um eine konstante Funktion, welche im Sinne der Erfindung sowohl von dem Fahrzeugparameter A als auch von dem Fahrzeugparameter B abhängt.

Wie ebenfalls in Fig. 3 gezeigt, können mittels dieser Kalibrierungsfunktionen bzw. einer Gesamtkalibrierungsfunktion Steuerdaten von noch nicht kalibrierten, d.h. zu kalibrierenden, Varianten der Brennkraftmaschine bestimmt werden 104, 204. Im vorliegenden Fall sind diese in den beiden rechten Spalten mit Variante 7 und Variante 8 bezeichnet.

Alternativ kann die Kalibrierungsfunktion ausgegeben werden 104', 204', beispielsweise über eine Schnittstelle an ein anderes Verfahren.

Unter Anwendung der im Vorhergehenden erläuterten erkannten Beziehung bzw. der auf dieser basierenden Kalibrierungsfunktionen kann bei der Kalibrierung der Varianten 7 und 8 eine Erstbedatung wie gezeigt vorgenommen werden. Allein in Bezug auf die Steuerparameter Logistikdaten und Lastschlagdämpfung lässt sich keine Erstbedatung vornehmen, da keine Kalibrierungsfunktion definiert werden konnte.

Auch die Steuerdaten der Erstbedatung können vorzugsweise ausgegeben werden 105.

Vorzugsweise wird in einem weiteren Arbeitsschritt die Steuerung der zu kalibrierenden Variante mittels der Kalibrierungsfunktion und/oder dem bestimmten Steuerdaten bedatet 106. Insbesondere werden hierbei die entsprechenden Werte der Steuerdaten der einzelnen Steuerparameter in einen Speicher der Steuerung eingeschrieben.

Die Brennkraftmaschinenvarianten 7 und 8, welche mit der Erstbedatung versehen sind, werden vorzugsweise im Weiteren einem Testbetrieb auf dem Prüfstand, im realen Fahrzeug oder auch auf einem HIL-Prüfstand unterzogen. Hierbei kann die Erstbedatung validiert bzw. verfeinert werden. Für die Versuche sollten vorzugsweise jene Steuerparameter, für welche keine automatische Erstbedatung für das erfindungsgemäße Verfahren vorgenommen werden kann, durch einen Testingenieur manuell bedatet werden.

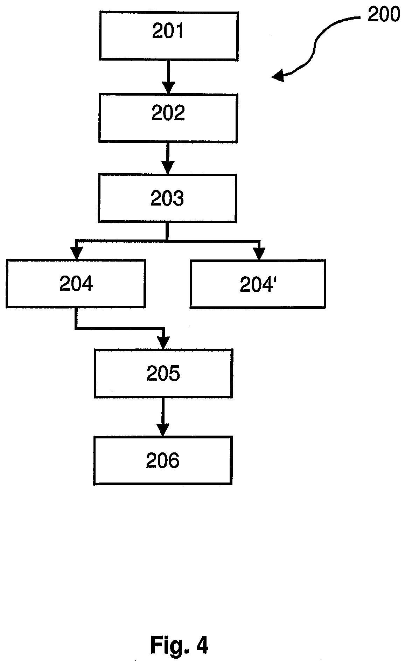

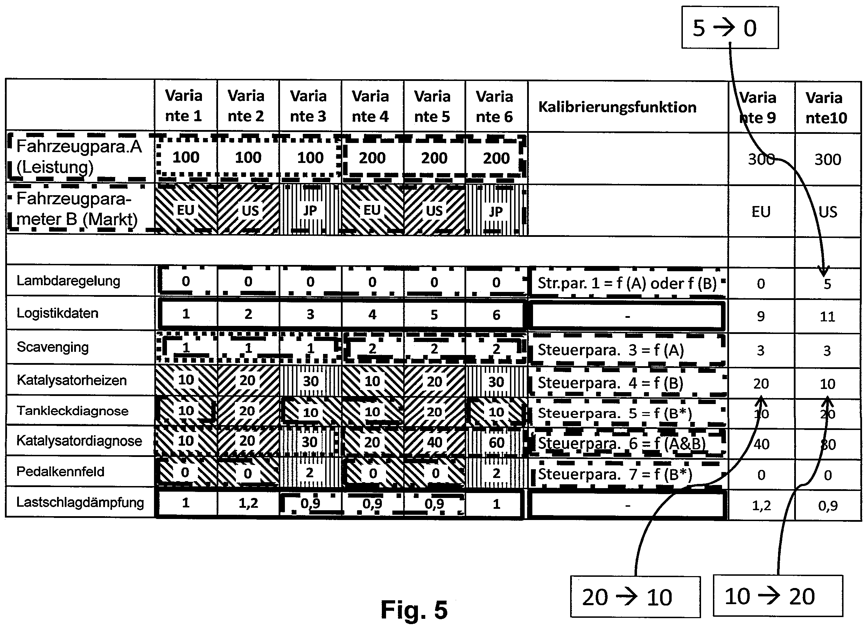

Anhand der **Fig. 4** und der **Fig. 5** wird eine Ausführungsform des Verfahrens 200 zur Kalibrierung einer Steuerung einer Fahrzeugkomponente beschrieben, welche dem vierten Aspekt der Erfindung entspricht.

Bis zur Definition einer Kalibrierungsfunktion bzw. mehrerer Kalibrierungsfunktionen entspricht diese Ausführungsform des Verfahrens 200 im Wesentlichen dem zweiten Aspekt der Erfindung.

Im Unterschied zum ersten und dritten Aspekt der Erfindung werden jedoch nach der Definition der Kalibrierungsfunktion bzw. der Kalibrierungsfunktionen, wie in Fig. 5 gezeigt, diese zur Überprüfung der Konsistenz der bereits kalibrierten Varianten 9 und 10 der Brennkraftmaschine angewandt. Die einzelnen Einträge werden anhand der gefundenen Steuerfunktion überprüft und Abweichungen zu den Steuerfunktionen können festgestellt werden 204. Wird eine solche Abweichung festgestellt, wird diese vorzugsweise ausgegeben, insbesondere als Hinweis auf diese Abweichung 205.

In einem nachfolgenden Arbeitsschritt kann die Abweichung dann in Übereinstimmung mit der jeweiligen Kalibrierungsfunktion korrigiert werden 206. So wurde in Fig. 5 beispielsweise in Bezug auf den Steuerparameter Lambdaregelung bei Variante 10 entdeckt, dass statt des sich aus der Kalibrierungsfunktion ergebenden Werts 0 der Wert 5 eingestellt bzw. gespeichert ist. Dieser Wert wird in dem Korrekturarbeitsschritt geändert. Bei dem Steuerparameter Katalysatorheizen wurde festgestellt, dass die Werte 20 und 10 zwischen den Varianten 9 und 10 vertauscht sind. Daher werden diese in einem nachfolgenden Korrekturarbeitsschritt jeweils gewechselt.

Vorzugsweise kann die Ermittlung der Kalibrierungsfunktion auf eine Mehrzahl von Brennkraftmaschinen-Projekten übertragen werden. Ein Brennkraftmaschinen-Projekt weist hierbei jeweils mehrere Varianten bzw. Derivate einer grundlegenden Ausführungsform einer Brennkraftmaschine auf. Die in den Fig. 2, 3 und 5 gezeigten Datensätze würden dabei jeweils einem Projekt entsprechen. Eine auf der Grundlage eines oder mehrerer dieser Projekte gefundene Kalibrierungsfunktion kann hierbei in Bezug auf alle Projekte validiert werden. Ist die Kalibrierungsfunktion für alle Projekte gültig, so kann diese als "zuverlässig" eingestuft werden. Ist diese nur für manche Projekte gültig, kann diese als "bedingt zuverlässig" eingestuft werden. Ist eine Kalibrierungsfunktion für alle bisherigen Projekte gültig, so kann in einem neuen Projekt oder bei der Entwicklung weiterer Varianten eines bestehenden Projekts eine sogenannte sichere Bedatung bzw. Erstbedatung der neu entwickelten Brennkraftmaschine vorgenommen werden. Handelt es sich dagegen nur um eine "bedingt zuverlässige" Kalibrierungsfunktion, kann nur eine Vorbedatung vorgenommen werden, welche nachfolgend überprüft bzw. validiert werden muss. Die Abstufung "zuverlässig" und "bedingt zuverlässig" kann hierbei auch weiter konkretisiert werden, indem Prozentzahlen oder Wahrscheinlichkeiten für eine Zuverlässigkeit der jeweiligen Kalibrierungsfunktion bzw. einer Gesamtkalibrierungsfunktion angegeben werden.

Hierdurch kann der Anteil der Gleichbedatung einzelner Varianten bzw. Projekte weiter erhöht werden und der Kalibrierungsaufwand daher weiter reduziert werden.

### "Moderne Entwicklungsplattform für die Kalibrierung von Fahrzeug-Antrieben" STORYLINE - HAUPTTEIL METHODIK 2.0

▪ Erkennen von Mustern in Kalibrierdaten und Ableitung von Bedatungs-Regeln
   ▪ Motivation
      ▪ Ungewollte Datenunterschiede zwischen Varianten vermeiden
      ▪ Notwendige Unterschiede zwischen Derivaten überwachen
      ▪ Ableiten von Erstbedatungen / Derivatbedatungen aus Datenstatistik
         ▪ Prinzip
         ▪ Clusterung der Datenunterschiede nach Variantenattributen
         ▪ Auf Arbeitspaketebene
         ▪ Auf Funktionsebene
         ▪ Auf Labelebene
   ▪ Anwendung
      ▪ Analyse eines Projektes / Einer Motorenfamilie
         ▪ Ableitung Schablone für Attribute Cluster
      ▪ Vergleich der Analyseergebnisse mehrerer Projekte
         ▪ Ableitung von Bedatungsregeln
▪ Erkennen von Mustern in Kalibrierdaten und Ableitung von Bedatungs-Regeln
   ▪ Motivation
      ▪ Ungewollte Datenunterschiede zwischen Varianten vermeiden
      ▪ Notwendige Unterschiede zwischen Derivaten überwachen
         ▪ Prinzip
         ▪ Clusterung der Datenunterschiede nach Variantenattributen
         ▪ Auf Arbeitspaketebene
         ▪ Auf Funktionsebene
         ▪ Auf Labelebene
      ▪ Anwendung
         ▪ Ableiten von "Schablonen" für Erstbedatungen / Derivatbedatungen aus Datenstatistik

### "Moderne Entwicklungsplattform für die Kalibrierung von Fahrzeug-Antrieben" CLUSTERUNG VON DATENUNTERSCHIEDEN NACH ATTRIBUTEN

▪ Prinzip: Clusterung der Datenunterschiede nach Attributen
▪ Betrachtung aller Datenstände eines Projektes 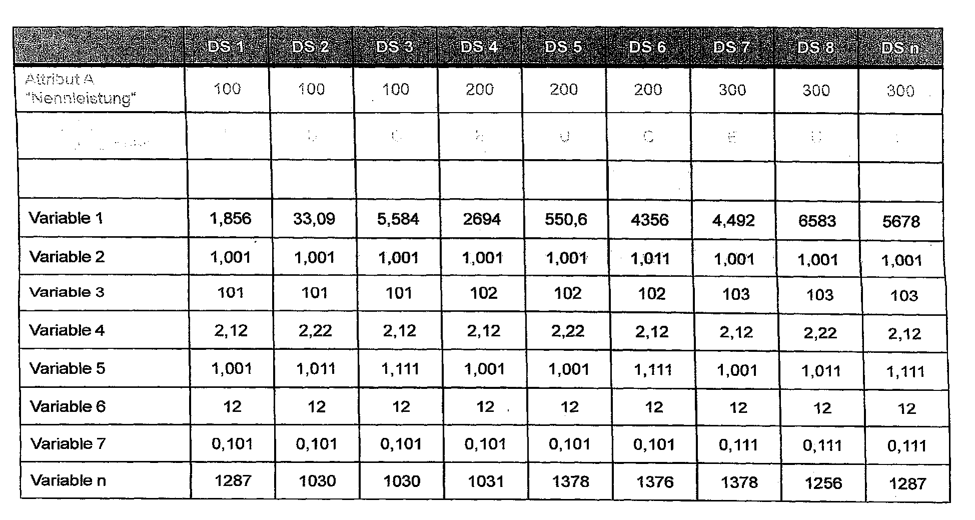
▪ Prinzip: Clusterung der Datenunterschiede nach Attributen
▪ Verlinkung der Attribute mit den Werteclustern unterschiedlicher Variablen (Labels, Funktionen, Arbeitspakete) der Datensätze

| | DS 1 | DS 2 | DS 3 | DS 4 | DS 5 | DS 6 | DS 7 | DS 8 | DS n |
|---|---|---|---|---|---|---|---|---|---|
| Attribut A "Nennleistung" | 100 | 100 | 100 | 200 | 200 | 200 | 300 | 300 | 300 |
| Attribut B "Ländervariante" | EU | USA | China | EU | USA | China | EU | USA | China |
| | | | | | | | | | |
| Variable 1 | 1,856 | 33,09 | 5,584 | 2694 | 550,6 | 4356 | 4,492 | 6583 | 5678 |
| Variable 2 | 1,001 | 1,001 | 1,001 | 1,001 | 1,001 | 1,011 | 1,001 | 1,001 | 1,001 |
| Variable 3 | 101 | 101 | 101 | 102 | 102 | 102 | 103 | 103 | 103 |
| Variable 4 | 2,12 | 2,22 | 2,12 | 2,12 | 2,22 | 2,12 | 2,12 | 2,22 | 2,12 |
| Variable 5 | 1,001 | 1,011 | 1,111 | 1,001 | 1,001 | 1,111 | 1,001 | 1,011 | 1,111 |
| Variable 6 | 12 | 12 | 12 | 12 | 12 | 12 | 12 | 12 | 12 |
| Variable 7 | 0,101 | 0,101 | 0,101 | 0,101 | 0,101 | 0,101 | 0,111 | 0,111 | 0,111 |
| Variable n | 1287 | 1030 | 1030 | 1031 | 1378 | 1376 | 1378 | 1256 | 1287 |

▪ Beispiel: Erstellung & Anwendung der "Schablone"
▪ Validierung neuer Datenerstellungen

| | DS 1 | DS 2 | DS 3 | DS 4 | DS 5 | DS 6 | DS 7 | DS 8 | DS n |
|---|---|---|---|---|---|---|---|---|---|
| Attribut A "Nennleistung" | 100 | 100 | 100 | 200 | 200 | 200 | 300 | 300 | 300 |
| Attribut B "Ländervariante" | EU | USA | China | EU | USA | China | EU | USA | China |

| | **Gleichbedatung** | | | | | | | | |
|---|---|---|---|---|---|---|---|---|---|
| Variable 1 | | | | | | | | | |
| Variable 2 | 1,001 | 1,001 | 1,001 | 1,001 | 1,001 | 1,011 | 1,001 | 1,001 | 1,001 |
| Variable 3 | | | | | | | | | |
| Variable 4 | 2,12 | | 2,12 | 2,12 | | 2,12 | 2,12 | | 2,12 |
| Variable 5 | 1,001 | | | 1,001 | | | 1,001 | | |
| Variable 6 | 12 | 12 | 12 | 12 | 12 | 12 | 12 | 12 | 12 |
| Variable 7 | 0,101 | 0,101 | 0,101 | 0,101 | 0,101 | 0,101 | | | |
| Variable n | | | | | | | | | |

• Beispiel: Erstellung & Anwendung der "Schablone"
• Validierung neuer Datenerstellungen

| | DS 1 | DS 2 | DS 3 | DS 4 | DS 5 | DS 6 | DS 7 | DS 8 | DS n |
|---|---|---|---|---|---|---|---|---|---|
| Attribut A "Nennleistung" | 100 | 100 | 100 | 200 | 200 | **200** | 300 | 300 | 300 |
| Attribut B "Ländervariante" | EU | USA | China | EU | USA | **China** | EU | USA | China |

| | **Gleichbedatung** | | | | | | | | |
|---|---|---|---|---|---|---|---|---|---|
| Variable 1 | | | | | | | | | |
| Variable 2 | 1,001 | 1,001 | 1,001 | 1,001 | 1,001 | **1,011** | 1,001 | 1,001 | 1,001 |
| Variable 3 | | | | | | | | | |
| Variable 4 | 2,12 | | 2,12 | 2,12 | | 2,12 | 2,12 | | 2,12 |
| Variable 5 | 1,001 | | | 1,001 | | | 1,001 | | |
| Variable 6 | 12 | 12 | 12 | 12 | 12 | 12 | 12 | 12 | 12 |
| Variable 7 | 0,101 | 0,101 | 0,101 | 0,101 | 0,101 | 0,101 | | | |
| Variable n | | | | | | | | | |

• Beispiel: Erstellung & Anwendung der "Schablone"
• Validierung neuer Datenerstellungen

| | DS 1 | DS 2 | DS 3 | DS 4 | DS 5 | DS 6 | DS 7 | DS 8 | DS n |
|---|---|---|---|---|---|---|---|---|---|
| Attribut A "Nennleistung" | 100 | 100 | 100 | 200 | 200 | 200 | 300 | 300 | 300 |
| Attribut B "Ländervariante" | EU | USA | China | EU | USA | China | EU | USA | China |

| | | | | **Attribut A** | | | | | |
|---|---|---|---|---|---|---|---|---|---|
| Variable 1 | | | | | | | | | |
| Variable 2 | | | | | | | | | |
| Variable 3 | 101 | 101 | 101 | 102 | 102 | 102 | 103 | 103 | |
| Variable 4 | | | | | | | | | |
| Variable 5 | | | | | | | | | |
| Variable 6 | | | | | | | | | |
| Variable 7 | | | | | | | 0,111 | 0,111 | 0,111 |
| Variable n | | | | | | | | | |

▪ Beispiel: Erstellung & Anwendung der "Schablone"
▪ Validierung neuer Datenerstellungen

| | DS 1 | DS 2 | DS 3 | DS 4 | DS 5 | DS 6 | DS 7 | DS 8 | DS n |
|---|---|---|---|---|---|---|---|---|---|
| AttributA "Nennleistung" | 100 | 100 | 100 | 200 | 200 | 200 | 300 | 300 | 300 |
| Attribut B "Ländervariante" | EU | USA | China | EU | USA | China | EU | USA | China |

| | | | | Attribut A | | | | | |
|---|---|---|---|---|---|---|---|---|---|
| Variable 1 | | | | | | | | | |
| Variable 2 | | | | | | | | | |
| Variable 3 | 101 | 101 | 101 | 102 | 102 | 102 | 103 | 103 | 103 |
| Variable 4 | | | | | | | | | |
| Variable 5 | | | | | | | | | |
| Variable 6 | | | | | | | | | |
| Variable 7 | | | | | | | 0,111 | 0,111 | 0,111 |
| Variable n | | | | | | | | | |

▪ Beispiel: Erstellung & Anwendung der "Schablone"
▪ Validierung neuer Datenerstellungen

| | DS 1 | DS 2 | DS 3 | DS 4 | DS 5 | DS 6 | DS 7 | DS 8 | DS n |
|---|---|---|---|---|---|---|---|---|---|
| Attribut A "Nennleistung" | 100 | 100 | 100 | 200 | 200 | 200 | 300 | 300 | 300 |
| Attribut B "Ländervariante" | EU | USA | China | EU | USA | China | EU | USA | China |
| | | | | | | | | | |
| Variable 1 | | | | | | | | | |
| Variable 2 | | | | | | | | | |
| Variable 3 | | | | | | | | | |
| Variable 4 | | 2,22 | | | 2,22 | | | 2,22 | |
| Variable 5 | | 1,011 | 1,111 | | 1,001 | 1,111 | | 1,011 | 1,111 |
| Variable 6 | | | | | | | | | |
| Variable 7 | | | | | | | | | |
| Variable n | | | | | | | | | |

▪ Beispiel: Erstellung & Anwendung der "Schablone"
▪ Validierung neuer Datenerstellungen

| | DS 1 | DS 2 | DS 3 | DS 4 | DS 5 | DS 6 | DS 7 | DS 8 | DS n |
|---|---|---|---|---|---|---|---|---|---|
| Attribut A "Nennleistung" | 100 | 100 | 100 | 200 | 200 | 200 | 300 | 300 | 300 |
| Attribut B "Ländervariante" | EU | USA | China | EU | USA | China | EU | USA | China |
| | | | | | | | | | |
| Variable 1 | | | | | | | | | |
| Variable 2 | | | | | | | | | |
| Variable 3 | | | | | | | | | |
| Variable 4 | | 2,22 | | 1,111 | 2,22 | | | 2,22 | |
| Variable 5 | | 1,011 | 1,111 | | 1,001 | 1,111 | | 1,011 | 1,111 |
| Variable 6 | | | | | | | | | |
| Variable 7 | | | | | | | | | |
| Variable n | | | | | | | | | |

▪ Erkennen von Mustern in Kalibrierdaten und Ableitung von Bedatungs-Regeln
▪ Motivation
   ▪ Ungewollte Datenunterschiede zwischen Varianten vermeiden
   ▪ Notwendige Unterschiede zwischen Derivaten überwachen
   ▪ Ableiten von Erstbedatungen / Derivatbedatungen aus Datenstatistik
      ▪ Prinzip
      ▪ Clusterung der Datenunterschiede nach Variantenattributen
      ▪ Auf Arbeitspaketebene
      ▪ Auf Funktionsebene
      ▪ Auf Labelebene
▪ Anwendung
   ▪ Analyse eines Projektes / Einer Motorenfamilie
      ▪ Ableitung Schablone für Attribute Cluster
   ▪ Vergleich der Analyseergebnisse mehrerer Projekte
      ▪ Ableitung von Bedatungsregeln

### CLUSTERUNG VON DATENUNTERSCHIEDEN NACH ATTRIBUTEN

▪ Prinzip: Clusterung der Datenunterschiede nach Attributen
   ▪ Verlinkung der Attribute mit den Werteclustern unterschiedlicher Variablen (Labels, Funktionen, Arbeitspakete) verschiedener Datensätze

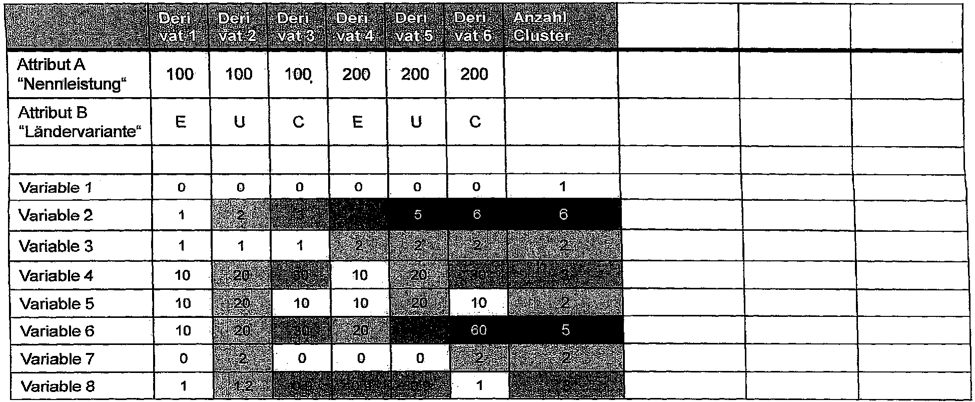

### ▪ Technische Beispiele:

▪ Ein Derivat ist ein Kalibrierdatensatz einer elektronischen Steuereinheit des Fahrzeugs
▪ Motorsteuergerät, Getriebesteuergerät, Hybrid- Controller, Tür Steuergerät...
▪ Beispiele für Derivate:
▪ x Fahrzeugvarianten mit identischem Motor
▪ y Leistungsvarianten mit identischem Getriebe

▪ Eine Variable kann beliebig fein oder Grob unterteilt sein
▪ Fein: "Label" = Einzelne Variable der xCU z.B.:
   ▪ Zündwinkelkennfeld über Last & Drehzahl bei minimaler Ventilüberschneidung & kleinem Ventilhub,
   ▪ Abgastemperaturschwelle für Schubabschaltverbot
▪ Mittel: "Funktion" = Vom xCU Hersteller vorgenommene Gruppierung der Labels z.B.
   ▪ Bildung Grundzündwinkel
   ▪ Bildung Fahrerwunschmoment
▪ Grob: "Arbeitspaket" = Vom Anwender vorgenommene Gruppierung der Funktionen / Labels z.B.
   ▪ Emissionsapplikation
   ▪ Schaltqualität
   ▪ Derivat = 2 Leistungsstufen mit 3 Ländervarianten im selben Fahrzeug & Getriebe
   ▪ Variable = Funktionsebene

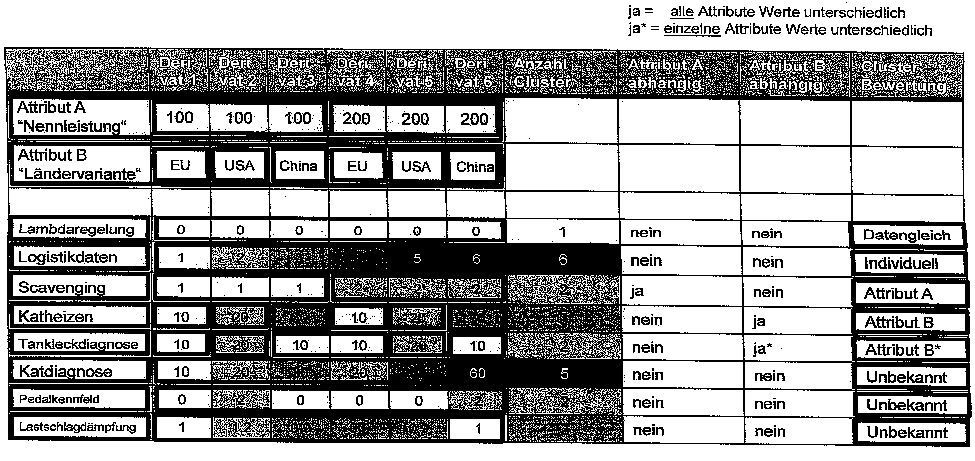

▪ Prinzip: Clusterung der Datenunterschiede nach Attributen
▪ Verlinkung der Attribute mit den Werteclustern unterschiedlicher Variablen (Labels, Funktionen, Arbeitspakete) verschiedener Datensätze 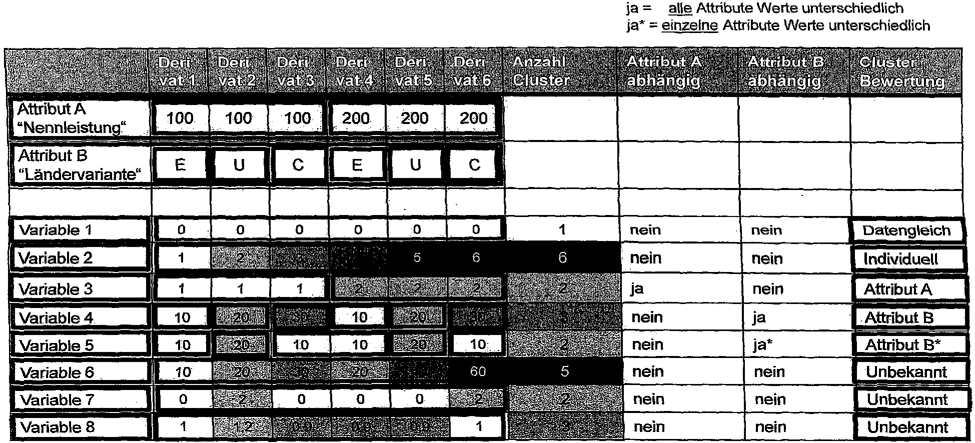
▪ Beispiel: Erstellung & Anwendung der "Schablone"
▪ Automatisiertes Clustern der Datenunterschiede nach Attributen innerhalb der Projekte 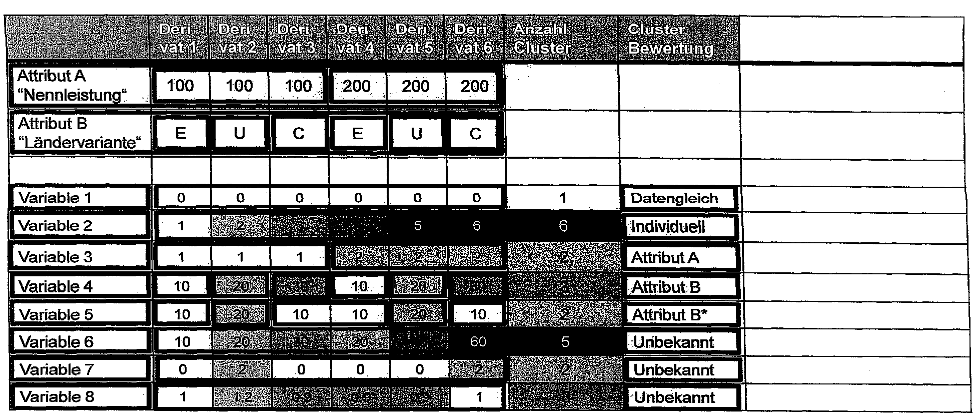
▪ Beispiel: Erstellung & Anwendung der "Schablone"
▪ Prüfung / Ergänzung der Ergebnisse (Viel Aufwand beim 1. Durchlauf, später weniger)
▪ Bewertung der Cluster durch Verantwortliche 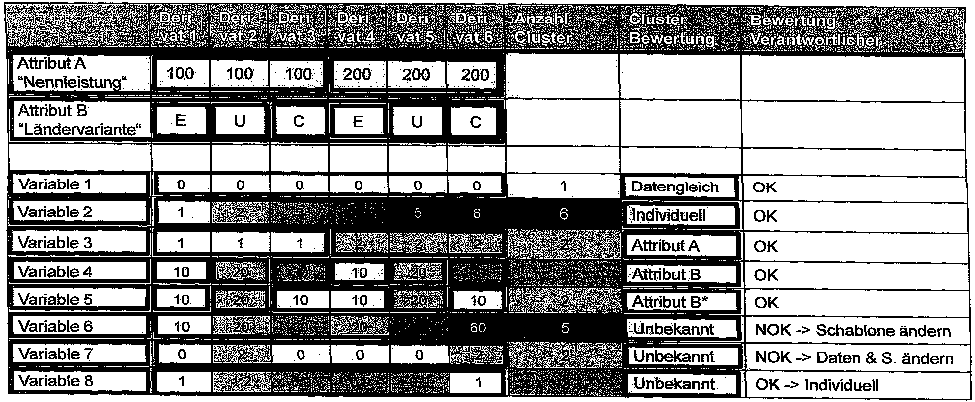
▪ Beispiel: Erstellung & Anwendung der "Schablone"
▪ Prüfung / Ergänzung der Ergebnisse
▪ Korrektur des Ist- Zustandes durch Datenbereinigung
▪ Ergänzung / Verfeinerung der Clusterung

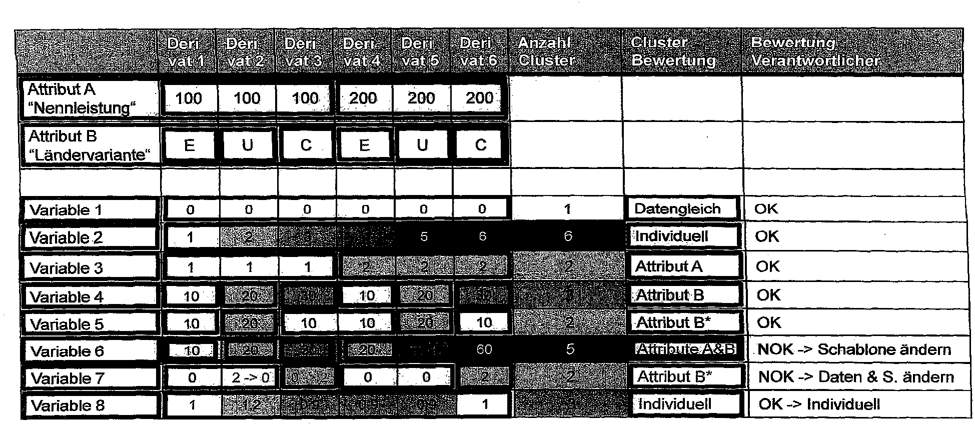

▪ Beispiel: Erstellung & Anwendung der "Schablone"
▪ Definition der Schablone zur weiteren Verwendung

| | Derivat 1 | Derivat 2 | Derivat 3 | Derivat 4 | Derivat 5 | Derivat 6 | Anzahl Cluster | Schablone Projekt A | |
|---|---|---|---|---|---|---|---|---|---|
| Attribut A "Nennleistung" | | | | | | | | | |
| Attribut B "Ländervariante" | | | | | | | | | |
| | | | | | | | | | |
| Variable 1 | | | | | | | | Datengleich | |
| Variable 2 | | | | | | | | Individuell | |
| Variable 3 | | | | | | | | Attribut | |
| Variable 4 | | | | | | | | Attribut B | |
| Variable 5 | | | | | | | | Attribut B* | |
| Variable 6 | | | | | | | | Attribute A&B | |
| Variable 7 | | | | | | | | Attribut B* | |
| Variable 8 | | | | | | | | Individuell | |

▪ Beispiel: Erstellung & Anwendung der "Schablone"
▪ Validierung neuer Datenerstellungen 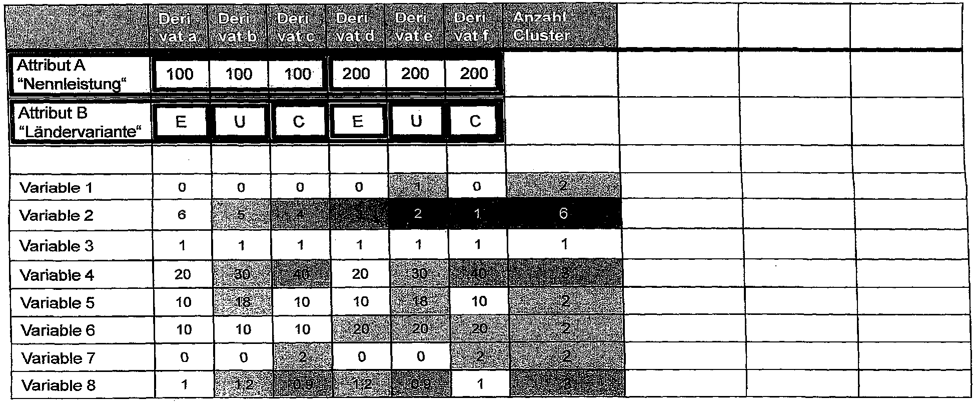
▪ Beispiel: Erstellung & Anwendung der "Schablone"
▪ Validierung neuer Datenerstellungen 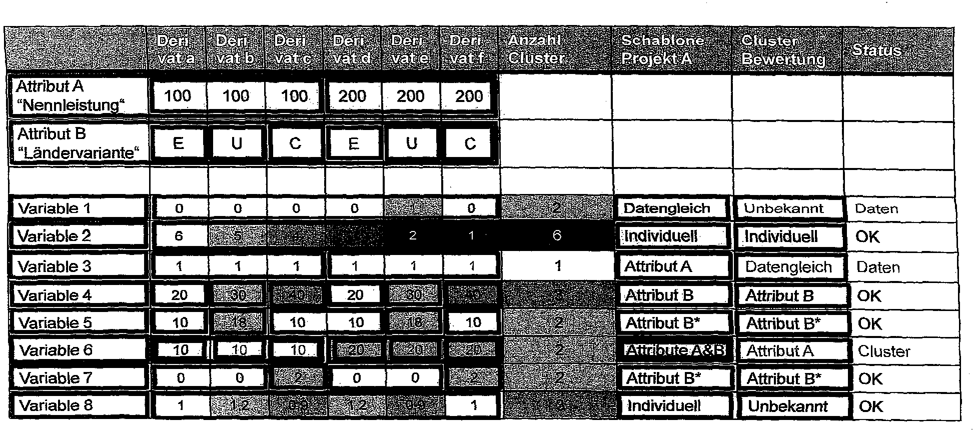
▪ Beispiel: Erstellung & Anwendung der "Schablone"
▪ Validierung neuer Datenerstellungen 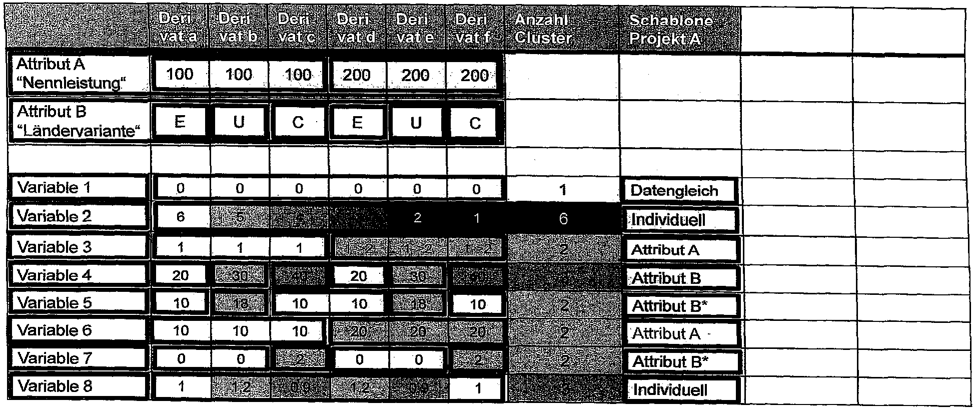
▪ Beispiel: Erstellung & Anwendung der "Schablone"
▪ Vergleich der Schablonen mehrerer Projekte
▪ Anwendung Bedatungsvorschriften für Erstbedatung neuer Derivate

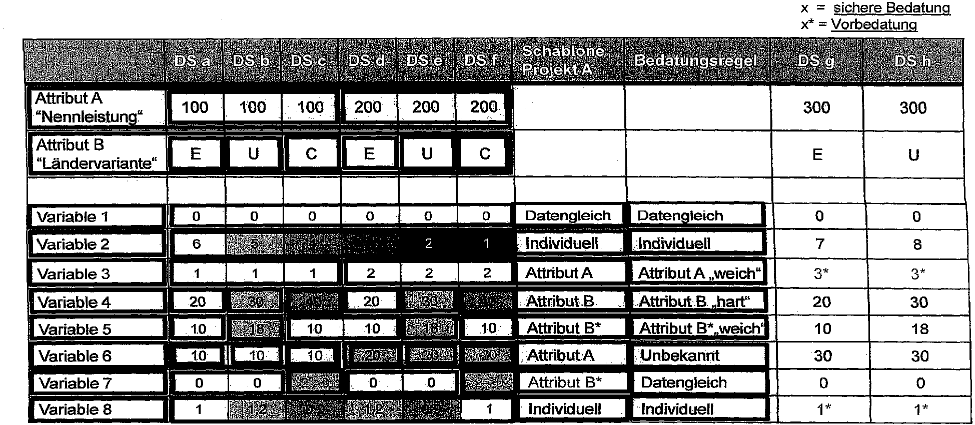

## Patentansprüche

1. Verfahren (100) zur Bestimmung von Steuerdaten und/oder Kalibrierung einer Steuerung einer Fahrzeugkomponente, insbesondere wenigstens eines Abschnitts eines Antriebsstrangs eines Kraftfahrzeugs, vorzugsweise einer Brennkraftmaschine, wobei in der Steuerung Steuerdaten hinterlegt sind, auf deren Grundlage die Fahrzeugkomponente gesteuert wird, und wobei das Verfahren folgende Arbeitsschritte aufweist:
Identifizieren wenigstens eines ersten Fahrzeugparameters einer Mehrzahl von Fahrzeugparametern bereits kalibrierter Varianten der Fahrzeugkomponente, welcher für unterschiedliche kalibrierte Varianten verschiedene Werte aufweist, vorzugsweise eine Nennleistung, ein Emissionswert und/oder eine Marktspezifikation, insbesondere EU, USA, JP (101);
Prüfen, wenn sich die bereits kalibrierten Varianten hinsichtlich des wenigstens einen ersten Fahrzeugparameters unterscheiden, wenigstens eines Teils der Steuerdaten der bereits kalibrierten Varianten auf ein Muster einer Abhängigkeit zu dem wenigstens einen ersten Fahrzeugparameter (102);
Definieren, wenn ein Muster einer Abhängigkeit zwischen dem wenigstens einen Fahrzeugparameter und dem Teil der Steuerdaten erkannt wird, einer Kalibrierungsfunktion für den wenigstens einen Teil der Steuerdaten, insbesondere für wenigstens einen Steuerparameter, auf der Grundlage einer aufgrund des Musters hergestellten Beziehung zu dem wenigstens einen ersten Fahrzeugparameter (103), wobei die Kalibrierungsfunktion eine Zuordnungsvorschrift ist, welche wenigstens einem Teil der Steuerdaten einen Wert in Abhängigkeit des Werts wenigstens eines Fahrzeugparameters zuordnet;
Bestimmen von Steuerdaten einer zu kalibrierenden Variante der Fahrzeugkomponente mittels der Kalibrierungsfunktion in Abhängigkeit von dem wenigstens einen ersten Fahrzeugparameter (104); und
Ausgeben der bestimmten Steuerdaten, insbesondere an die Steuerung der Fahrzeugkomponente (105).

2. Verfahren (100; 200) zum Erstellen einer Kalibrierungsfunktion und/oder zur Kalibrierung einer Steuerung einer Fahrzeugkomponente, insbesondere wenigstens eines Abschnitts eines Antriebsstrangs eines Fahrzeugs, wobei in der Steuerung Steuerdaten hinterlegt sind, auf deren Grundlage die Fahrzeugkomponente gesteuert wird, und wobei das Verfahren folgende Arbeitsschritte aufweist:
Identifizieren wenigstens eines ersten Fahrzeugparameters einer Mehrzahl von Fahrzeugparametern bereits kalibrierter Varianten der Fahrzeugkomponente, welcher für unterschiedliche kalibrierte Varianten verschiedene Werte aufweist (101; 201);
Prüfen, wenn sich die bereits kalibrierten Varianten hinsichtlich des wenigstens einen ersten Fahrzeugparameters unterscheiden, wenigstens eines Teils der Steuerdaten der bereits kalibrierten Varianten auf ein Muster einer Abhängigkeit zu dem wenigstens einen ersten Fahrzeugparameter (102; 202);
Definieren, wenn ein Muster einer Abhängigkeit zwischen dem wenigstens einen Fahrzeugparameter und dem Teil der Steuerdaten erkannt wird, einer Kalibrierungsfunktion für den wenigstens einen Teil der Steuerdaten, insbesondere für wenigstens einen Steuerparameter, auf der Grundlage einer aufgrund des Musters hergestellten Beziehung zu dem wenigstens einen ersten Fahrzeugparameter (103; 203), wobei die Kalibrierungsfunktion eine Zuordnungsvorschrift ist, welche wenigstens einem Teil der Steuerdaten einen Wert in Abhängigkeit des Werts wenigstens eines Fahrzeugparameters zuordnet;
Ausgeben der Kalibrierungsfunktion (104'; 204').

3. Verfahren nach Anspruch 1 oder 2, wobei beim Prüfen auf ein Muster einer Abhängigkeit zwischen dem wenigstens einen Teil der Steuerdaten und dem wenigstens einen ersten Fahrzeugparameter gleiche Werte jeweils eines Steuerparameters der Steuerdaten der unterschiedlichen kalibrierten Varianten einem Cluster zugeordnet werden und wobei das Muster zu dem wenigstens einen ersten Fahrzeugparameter anhand der Cluster geprüft wird.

4. Verfahren nach einem der Ansprüche 1 bis 3, wobei für jenen Teil der Steuerdaten, für welchen keine Beziehung zu wenigstens einem Fahrzeugparameter erkannt wurde, keine Kalibrierungsfunktion erstellt wird.

5. Verfahren nach einem der Ansprüche 1 bis 4, wobei unterschiedliche Steuerparameter unterschiedliche Kalibrierungsfunktionen in Bezug auf den wenigstens einen Fahrzeugparameter und/oder unterschiedliche Kalibrierungsfunktionen in Bezug auf jeweils unterschiedliche Steuerparameter aufweisen können.

6. Verfahren (100) zur Kalibrierung einer Steuerung einer Fahrzeugkomponente, insbesondere wenigstens eines Abschnitts eines Antriebsstrangs eines Fahrzeugs, wobei in der Steuerung Steuerdaten hinterlegt sind, auf deren Grundlage die Fahrzeugkomponente gesteuert wird, wobei mehrere Varianten der Fahrzeugkomponente existieren, welche sich durch wenigstens einen ersten Fahrzeugparameter unterscheiden, und wobei das Verfahren folgende Arbeitsschritte aufweist:
Bestimmen von Steuerdaten einer zu kalibrierenden Variante der Fahrzeugkomponente mittels einer Kalibrierungsfunktion in Abhängigkeit von dem wenigstens einen ersten Fahrzeugparameter, wobei die Kalibrierungsfunktion auf einer aufgrund eines Musters hergestellten Beziehung zwischen wenigstens einem Teil von Steuerdaten einer Mehrzahl bereits kalibrierter Varianten der Fahrzeugkomponente und dem wenigstens einen ersten Fahrzeugparameter beruht (104), eine Zuordnungsvorschrift ist, welche wenigstens einem Teil der Steuerdaten einen Wert in Abhängigkeit des Werts wenigstens eines Fahrzeugparameters zuordnet und mittels eines Verfahrens gemäß wenigstens einem der Ansprüche 1 bis 5 bestimmt ist; und
Ausgeben der bestimmten Steuerdaten (105).

7. Verfahren nach einem der Ansprüche 1 oder 6, des Weiteren den folgenden Arbeitsschritt aufweisend:
Bedaten der Steuerung zu kalibrierenden Variante der Fahrzeugkomponente mit der Kalibrierungsfunktion und/oder den bestimmten Steuerdaten (106).

8. Verfahren (200) zur Kalibrierung einer Steuerung einer Fahrzeugkomponente, insbesondere wenigstens eines Abschnitts eines Antriebsstrangs eines Fahrzeugs, wobei in der Steuerung Steuerdaten hinterlegt sind, auf deren Grundlage die Fahrzeugkomponente gesteuert wird, wobei mehrere bereits kalibrierte Varianten der Fahrzeugkomponente existieren, welche sich durch wenigstens einen ersten Fahrzeugparameter unterscheiden, und wobei das Verfahren folgende Arbeitsschritte aufweist:
Überprüfen von Steuerdaten einer bereits bedateten, zu kalibrierenden Variante der Fahrzeugkomponente mittels einer Kalibrierungsfunktion in Abhängigkeit von dem wenigstens einen ersten Fahrzeugparameter, wobei die Kalibrierungsfunktion auf einer aufgrund eines Musters hergestellten Beziehung zwischen wenigstens einem Teil von Steuerdaten einer Mehrzahl bereits kalibrierter Varianten der Fahrzeugkomponente und dem wenigstens einen ersten Fahrzeugparameter beruht (204), eine Zuordnungsvorschrift ist, welche wenigstens einem Teil der Steuerdaten einen Wert in Abhängigkeit des Werts wenigstens eines Fahrzeugparameters zuordnet und mittels eines Verfahrens gemäß wenigstens einem der Ansprüche 1 bis 5 bestimmt ist; und
Ausgeben, wenn eine Abweichung der überprüften Steuerdaten von der Kalibrierungsfunktion vorliegt, eines Hinweises auf die Abweichung (205).

9. Verfahren nach Anspruch 8, des Weiteren den folgenden Arbeitsschritt aufweisend:
Korrigieren der Abweichung der überprüften Steuerdaten von der Kalibrierungsfunktion in der Steuerung der zu kalibrierenden Variante (206).

10. Verfahren nach Anspruch 7 oder 9, des Weiteren den folgenden Arbeitsschritt aufweisend:
Durchführen wenigstens einen Prüfstandversuchs mit der bedateten, zu kalibrierenden Fahrzeugkomponente oder von wenigstens einem Fahrversuch mit einem Fahrzeug mit der bedateten, zu kalibrierenden Fahrzeugkomponente (107; 207);
Vergleichen von Ist-Werten von Betriebsparametern der Fahrzeugkomponente mit Soll-Werten (108; 208); und
Erneutes Bedaten der Steuerung der zu kalibrierenden Fahrzeugkomponente auf der Grundlage von Abweichungen zwischen den Ist-Werten und den Soll-Werten der Betriebsparameter der Fahrzeugkomponente (109; 209).

11. Verfahren nach einem der vorhergehenden Ansprüche, wobei die Beziehung eine Gleichheit eines Steuerparameters der Steuerdaten für gleiche Werte oder Ausprägungen wenigstens eines zweiten Fahrzeugparameters, eine lineare Abhängigkeit eines Steuerparameters der Steuerdaten von dem wenigstens einen ersten Fahrzeugparameter für gleiche Werte oder Ausprägungen wenigstens eines zweiten Fahrzeugparameters, eine polynomiale Abhängigkeit eines Steuerparameters der Steuerdaten von dem wenigstens einen ersten Fahrzeugparameter für gleiche Werte oder Ausprägungen wenigstens eines zweiten Fahrzeugparameters, und/oder eine statistische Abhängigkeit eines Steuerparameters der Steuerdaten von dem wenigstens einen ersten Fahrzeugparameter für gleiche Werte oder Ausprägungen wenigstens eines zweiten Fahrzeugparameters ist.

12. Verfahren nach einem der vorhergehenden Ansprüche, wobei die Beziehung für wenigstens zwei Gruppen von Varianten mit jeweils gleichen Werten/Ausprägungen des wenigstens eines ersten Fahrzeugparameters und jeweils unterschiedlichen Werten/Ausprägungen wenigstens eines zweiten Fahrzeugparameters gilt, wobei eine erste Gruppe im Vergleich zu einer zweiten Gruppe unterschiedliche Werte oder Ausprägungen des wenigstes einen ersten Fahrzeugparameters und gleiche Werte oder Ausprägungen des wenigstens einen zweiten Fahrzeugparameters aufweist.

13. Verfahren nach einem der vorhergehenden Ansprüche, wobei alle Arbeitsschritte automatisiert, insbesondere durch ein System zur Kalibrierung einer Steuerung einer Fahrzeugkomponente, ausgeführt werden.

14. Computerprogramm, das Anweisungen umfasst, welche, wenn sie von einem Computer ausgeführt werden, diesen dazu veranlassen, die Schritte eines Verfahrens (100; 200) gemäß einem der Ansprüche 1 bis 13 ausführen.

15. Computer-lesbares Medium, auf welchem ein Computerprogramm nach Anspruch 14 gespeichert ist.

16. System zur Kalibrierung einer Steuerung einer Fahrzeugkomponente, insbesondere wenigstens eines Abschnitts des Antriebsstrangs, wobei in der Steuerung Steuerdaten hinterlegt sind, auf deren Grundlage die Fahrzeugkomponente gesteuert wird, aufweisend:
eine erste Schnittstelle zum Einlesen von Steuerdaten und einer Mehrzahl von Fahrzeugparametern bereits kalibrierter Varianten der Fahrzeugkomponente und von Fahrzeugparametern wenigstens einer zu kalibrierenden Variante;
eine Recheneinheit eingerichtet zum Identifizieren wenigstens eines ersten Fahrzeugparameters, vorzugsweise einer Nennleistung, eines Emissionwerts und/oder einer Marktspezifikation, insbesondere EU, USA, JP, einer Mehrzahl von Fahrzeugparametern bereits kalibrierter Varianten der Fahrzeugkomponente, wobei der erste Fahrzeugparameter für unterschiedliche bereits kalibrierte Varianten verschieden ist, zum Prüfen wenigstens eines Teils der Steuerdaten der bereits kalibrierten Varianten auf ein Muster einer Abhängigkeit zu dem wenigstens einen ersten Fahrzeugparameter und zum Definieren, wenn ein Muster einer Abhängigkeit zwischen dem wenigstens einen Fahrzeugparameter und dem Teil der Steuerdaten erkannt wird, einer Kalibrierungsfunktion für den wenigstens einen Teil der Steuerdaten auf der Grundlage einer aufgrund des Musters hergestellten Beziehung zu dem ersten Fahrzeugparameter und zum Bestimmen von Steuerdaten einer zu kalibrierenden Variante der Fahrzeugkomponente anhand der Kalibrierungsfunktion, wobei die Kalibrierungsfunktion eine Zuordnungsvorschrift ist, welche wenigstens einem Teil der Steuerdaten einen Wert in Abhängigkeit des Werts wenigstens eines Fahrzeugparameters zuordnet; und
eine zweite Schnittstelle zum Ausgeben der bestimmten Steuerdaten, insbesondere an die Steuerung der Fahrzeugkomponente.

## Claims

1. A method (100) for determining control data and/or calibrating a controller of a vehicle component, in particular at least one section of a drive train of a motor vehicle, preferably an internal combustion engine, wherein control data, on the basis of which the vehicle component is controlled, is stored in the controller, and wherein the method comprises the following working steps:
identifying at least one first vehicle parameter of a plurality of vehicle parameters of already calibrated variants of the vehicle component which has different values for different calibrated variants, preferably a rated power, an emission value and/or a market specification, in particular EU, USA or JP (101);
if the already calibrated variants differ in terms of the at least one first vehicle parameter, checking at least one portion of the control data of the already calibrated variants for a pattern of dependency on the at least one first vehicle parameter (102);
if a pattern of dependency between the at least one vehicle parameter and the portion of the control data is detected, defining a calibration function for the at least one portion of the controlled data, in particular for at least one control parameter, on the basis of the relationship established based on the pattern with the at least one first vehicle parameter (103), wherein the calibration function is an assignment rule which associates at least a portion of the control data with a value based on the value of at least one vehicle parameter;
determining control data of a variant of the vehicle component to be calibrated by means of the calibration function as a function of the at least one first vehicle parameter (104); and
outputting the determined control data, in particular to the controller of the vehicle component (105).

2. A method (100, 200) for generating a calibration function and/or for calibrating a controller of a vehicle component, in particular at least one section of a drive train of a motor vehicle, wherein control data, on the basis of which the vehicle component is controlled, is stored in the controller, and wherein the method comprises the following working steps:
identifying at least one first vehicle parameter of a plurality of vehicle parameters of already calibrated variants of the vehicle component which has different values for different calibrated variants (101; 201);
if the already calibrated variants differ in terms of the at least one first vehicle parameter, checking at least one portion of the control data of the already calibrated variants for a pattern of dependency on the at least one first vehicle parameter (102; 202);
if a pattern of dependency between the at least one vehicle parameter and the portion of the control data is detected, defining a calibration function for the at least one portion of the control data, in particular for at least one control parameter, on the basis of the relationship established based on the pattern with the at least one first vehicle parameter (103; 203), wherein the calibration function is an assignment rule which associates at least a portion of the control data with a value based on the value of at least one vehicle parameter;
outputting the calibration function (104'; 204').

3. The method according to claim 1 or 2, wherein when checking for a pattern of dependency between the at least one portion of the control data and the at least one first vehicle parameter, the same respective control parameter values of the control data of differently calibrated variants are assigned to a cluster, and wherein the pattern with the at least one first vehicle parameter is checked on the basis of the cluster.

4. The method according to one of claims 1 to 3, wherein no calibration function is provided for the portion of the control data not having any detected relationship to at least one vehicle parameter.

5. The method according to one of claims 1 to 4, wherein different control parameters can have different calibration functions in relation to the at least one vehicle parameter and/or different calibration functions in relation to respective different control parameters.

6. A method (100) for calibrating a controller of a vehicle component, in particular at least one section of a drive train of a motor vehicle, wherein control data, on the basis of which the vehicle component is controlled, is stored in the controller, wherein there are multiple variants of the vehicle component differing by at least one first vehicle parameter, and wherein the method comprises the following working steps:
determining control data of a variant of the vehicle component to be calibrated by means of the calibration function as a function of the at least one first vehicle parameter, wherein the calibration function is based on a pattern of a dependency between at least one portion of the control data of a plurality of already calibrated variants of the vehicle component and the at least one vehicle parameter (104), wherein the calibration function is an assignment rule which associates at least a portion of the control data with a value based on the value of at least one vehicle parameter and which is determined by a method according to at least one of claims 1 to 5; and
outputting the determined control data (105).

7. The method according to one of claims 1 or 6, further comprising the following working step:
populating the controller of the variant of the vehicle component to be calibrated with the calibration function and/or the determined control data (106).

8. A method (200) for calibrating a controller of a vehicle component, in particular at least one section of a drive train of a motor vehicle, wherein control data, on the basis of which the vehicle component is controlled, is stored in the controller, wherein there are multiple already calibrated variants of the vehicle component differing by at least one first vehicle parameter, and wherein the method comprises the following working steps:
checking the control data of a previously populated variant of a vehicle component to be calibrated by means of a calibration function in accordance with the at least one first vehicle parameter, wherein the calibration function is based on a pattern of dependency between at least one portion of the control data of a plurality of already calibrated variants of the vehicle component and the at least one vehicle parameter (204), wherein the calibration function is an assignment rule which associates at least one portion of the control data with a value based on the value of at least one vehicle parameter, and is determined by means of a method according to at least one of claims 1 to 5; and
if the checked control data deviates from the calibration function, outputting a notification of deviation (205).

9. The method according to claim 8, further comprising the following working step:
correcting the deviation of the checked control data from the calibration function in the controller of the variant to be calibrated (206).

10. The method according to claim 7 or 9, further comprising the following working steps:
conducting at least one test bench trial with the populated vehicle component to be calibrated or at least one road test with a vehicle having the populated vehicle component to be calibrated (107; 207);
comparing actual values of the vehicle component operating parameters to target values (108; 208); and
repopulating the controller of the vehicle component to be calibrated on the basis of deviations between the actual values and the target values of the vehicle component operating parameter (109; 209).

11. The method according to one of the preceding claims, wherein the relationship constitutes an equivalency of a control parameter of the control data for the same values or characteristics of at least one second vehicle parameter, a linear dependence of a control parameter of the control data on at least one first vehicle parameter for the same values or characteristics of at least one second vehicle parameter, a polynomial dependence of a control parameter of the control data on at least one first vehicle parameter for the same values or characteristics of at least one second vehicle parameter, and/or a statistical dependence of a control parameter of the control data on at least one first vehicle parameter for the same values or characteristics of at least one second vehicle parameter.

12. The method according to one of the preceding claims, wherein the relationship applies to at least two groups of variants with the respective same values/characteristics of the at least one first vehicle parameter and respective different values/characteristics of at least one second vehicle parameter, wherein compared to a second group, a first group exhibits different values or characteristics of the at least one first vehicle parameter and the same values or characteristics of the at least one second vehicle parameter.

13. Method according to one of the preceding claims, wherein all the working steps are automated, in particular by a system for calibrating a controller of a vehicle component.

14. A computer program comprising commands which, when executed on a computer, prompt same to execute the steps of the method (100; 200) according to one of claims 1 to 13.

15. A computer-readable media on which a computer program according to claim 14 is stored.

16. A system for calibrating a controller of a vehicle component, in particular at least one section of a drive train of a motor vehicle, wherein control data, on the basis of which the vehicle component is controlled, is stored in the controller, comprising:
a first interface for importing control data and a plurality of vehicle parameters of already calibrated variants of the vehicle component and vehicle components of at least one variant to be calibrated;
a processing unit configured to identify at least one first vehicle parameter, preferably a rated power, an emission value and/or a market specification, in particular EU, USA or JP, of a plurality of vehicle parameters of already calibrated variants of the vehicle component, wherein the first vehicle parameter is different for different already calibrated variants, to check at least one portion of the control data of the already calibrated variants for a pattern of dependency with the at least one first vehicle parameter, and to define, if a pattern of dependency between the at least one vehicle parameter and the portion of the control data is detected, a calibration function for at least one portion of the control data on the basis of the relationship based on the pattern with the first vehicle parameter, and to determine control data of a vehicle component variant to be calibrated on the basis of the calibration function, wherein the calibration function is an assignment rule which associates at least a portion of the control data with a value based on the value of at least one vehicle parameter; and
a second interface for outputting the determined control data, in particular to the controller of the vehicle component.

## Revendications

1. Procédé (100) servant à déterminer des données de commande et/ou à étalonner une commande d'un composant de véhicule, en particulier au moins une section d'une chaîne cinématique d'un véhicule automobile, de préférence d'un moteur à combustion interne, dans lequel sont enregistrées dans la commande des données de commande, sur la base desquelles le composant de véhicule est commandé et dans lequel le procédé présente des étapes de travail qui suivent :
d'identification d'au moins un premier paramètre de véhicule d'une multitude de paramètres de véhicule de variantes déjà étalonnées du composant de véhicule, lequel présente des valeurs différentes pour des variantes étalonnées différentes, de préférence une puissance nominale, une valeur d'émission et/ou une spécification de marché, en particulier l'EU, les USA, le JP (101) ;
de contrôle, quand les variantes déjà étalonnées se distinguent eu égard à l'au moins un premier paramètre de véhicule, d'un schéma d'une dépendance à l'au moins un premier paramètre de véhicule d'au moins une partie des données de commande des variantes déjà étalonnées (102) ;
de définition, quand un schéma d'une dépendance entre l'au moins un paramètre de véhicule et la partie des données de commande est identifié, d'une fonction d'étalonnage pour l'au moins une partie des données de commande, en particulier pour au moins un paramètre de commande, sur la base d'une relation établie du fait du schéma avec l'au moins un premier paramètre de véhicule (103), dans lequel la fonction d'étalonnage est une spécification d'attribution, laquelle associe à au moins une partie des données de commande une valeur en fonction de la valeur de l'au moins un paramètre de véhicule ;
de définition de données de commande d'une variante à étalonner du composant de véhicule au moyen de la fonction d'étalonnage en fonction de l'au moins un premier paramètre de véhicule (104) ; et
d'envoi des données de commande déterminées, en particulier à la commande du composant de véhicule (105).

2. Procédé (100, 200) servant à créer une fonction d'étalonnage et/ou servant à étalonner une commande d'un composant de véhicule, en particulier d'au moins une section d'une chaîne cinématique d'un véhicule, dans lequel sont enregistrées dans la commande des données de commande, sur la base desquelles le composant de véhicule est commandé, et dans lequel le procédé présente des étapes de travail suivantes :
d'identification d'au moins un premier paramètre de véhicule d'une multitude de paramètres de véhicule de variantes déjà étalonnées du composant de véhicule, lequel présente des valeurs différentes pour différentes variantes étalonnées (101 ; 201) ;
de contrôle, quand les variantes déjà étalonnées se distinguent eu égard à l'au moins un premier paramètre de véhicule, d'un schéma d'une dépendance à l'au moins un premier paramètre de véhicule d'au moins une partie des données de commande des variantes déjà étalonnées (102 ; 202) ;
de définition, quand un schéma d'une dépendance entre l'au moins un paramètre de véhicule et la partie des données de commande est identifié, d'une fonction d'étalonnage pour l'au moins une partie des données de commande, en particulier pour au moins un paramètre de commande, sur la base d'une relation établie du fait du schéma avec l'au moins un premier paramètre de véhicule (103 ; 203), dans lequel la fonction d'étalonnage est une spécification d'attribution, laquelle attribue à au moins une partie des données de commande une valeur en fonction de la valeur de l'au moins un paramètre de véhicule ;
d'envoi de la fonction d'étalonnage (104' ; 204').

3. Procédé selon la revendication 1 ou 2, dans lequel lors du contrôle d'un schéma d'une dépendance entre l'au moins une partie des données de commande et l'au moins un premier paramètre de véhicule des valeurs identiques de respectivement un paramètre de commande des données de commande des différentes variantes étalonnées sont attribuées à un cluster et dans lequel le schéma concernant l'au moins un premier paramètre de véhicule est contrôlé à l'aide des clusters.

4. Procédé selon l'une quelconque des revendications 1 à 3, dans lequel aucune fonction d'étalonnage n'est établie pour la partie des données de commande, pour laquelle précisément aucune relation avec au moins un paramètre de véhicule n'a été identifiée.

5. Procédé selon l'une quelconque des revendications 1 à 4, dans lequel différents paramètres de commande peuvent présenter différentes fonctions d'étalonnage concernant l'au moins un paramètre de véhicule et/ou différentes fonctions d'étalonnage concernant des paramètres de commande respectivement différents.

6. Procédé (100) servant à étalonner une commande d'un composant de véhicule, en particulier d'au moins une section d'une chaîne cinématique d'un véhicule, dans lequel sont enregistrées dans la commande des données de commande, sur la base desquelles le composant de véhicule est commandé, dans lequel plusieurs variantes du composant de véhicule existent, lesquelles se distinguent par au moins un premier paramètre de véhicule, et dans lequel le procédé présente des étapes de travail suivantes :
de détermination de données de commande d'une variante à étalonner du composant de véhicule au moyen d'une fonction d'étalonnage en fonction de l'au moins un premier paramètre de véhicule, dans lequel la fonction d'étalonnage repose sur une relation établie sur la base d'un schéma entre au moins une partie de données de commande d'une multitude de variantes déjà étalonnées du composant de véhicule et l'au moins un premier paramètre de véhicule (104), est une spécification d'attribution, laquelle attribue à au moins une partie des données de commande une valeur en fonction de la valeur d'au moins un paramètre de véhicule et est déterminée au moyen d'un procédé selon au moins l'une quelconque des revendications 1 à 5 ; et
d'envoi des données de commande définies (105).

7. Procédé selon l'une quelconque des revendications 1 ou 6, présentant par ailleurs l'étape de travail suivante : de production de données pour la commande de la variante à étalonner du composant de véhicule avec la fonction d'étalonnage et/ou les données de commande déterminées (106) .

8. Procédé (200) servant à étalonner une commande d'un composant de véhicule, en particulier d'au moins une section d'une chaîne cinématique d'un véhicule, dans lequel sont enregistrées dans la commande des données de commande, sur la base desquelles le composant de véhicule est commandé, dans lequel existent plusieurs variantes déjà étalonnées du composant de véhicule, lesquelles se distinguent par au moins un premier paramètre de véhicule, et dans lequel le procédé présente des étapes de travail suivantes :
de vérification de données de commande d'une variante à étalonner déjà dotées de données du composant de véhicule au moyen d'une fonction d'étalonnage en fonction de l'au moins un premier paramètre de véhicule, dans lequel la fonction d'étalonnage repose sur une relation établie du fait d'un schéma entre au moins une partie de données de commande d'une multitude de variantes déjà étalonnées du composant de véhicule et l'au moins un premier paramètre de véhicule (204), est une spécification d'attribution, laquelle attribue à au moins une partie des données de commande une valeur en fonction de la valeur d'au moins un paramètre de véhicule et est déterminée au moyen d'un procédé selon au moins l'une quelconque des revendications 1 à 5 ; et
d'envoi, quand un écart des données de commande vérifiées par rapport à la fonction d'étalonnage est présent, d'une indication de l'écart (205).

9. Procédé selon la revendication 8, présentant par ailleurs l'étape de travail suivante :
de correction de l'écart des données de commande vérifiées par la fonction d'étalonnage dans la commande de la variante à étalonner (206).

10. Procédé selon la revendication 7 ou 9, présentant par ailleurs l'étape de travail suivante :
de mise en œuvre d'au moins un essai au banc d'essai avec le composant de véhicule à étalonner doté de données ou d'au moins un essai de conduite avec un véhicule avec le composant de véhicule à étalonner doté de données (107 ; 207) ;
de comparaison de valeurs réelles de paramètres de fonctionnement du composant de véhicule à des valeurs théoriques (108 ; 208) ; et
de production une nouvelle fois de données pour la commande du composant de véhicule à étalonner sur la base d'écarts entre les valeurs réelles et les valeurs théoriques des paramètres de fonctionnement du composant de véhicule (109 ; 209).

11. Procédé selon l'une quelconque des revendications précédentes, dans lequel la relation est une similitude d'un paramètre de commande des données de commande pour des valeurs ou formes identiques d'au moins un deuxième paramètre de véhicule, une dépendance linéaire d'un paramètre de commande des données de commande à l'au moins un premier paramètre de véhicule pour des valeurs ou formes identiques d'au moins un deuxième paramètre de véhicule, une dépendance polynomiale d'un paramètre de commande des données de commande à l'au moins un premier paramètre de véhicule pour des valeurs ou formes identiques d'au moins un deuxième paramètre de véhicule, et/ou une dépendance statistique d'un paramètre de commande des données de commande à l'au moins un premier paramètre de véhicule pour des valeurs ou formes identiques d'au moins un deuxième paramètre de véhicule.

12. Procédé selon l'une quelconque des revendications précédentes, dans lequel s'applique la relation pour au moins deux groupes de variantes avec respectivement des valeurs/formes identiques de l'au moins un premier paramètre de véhicule et respectivement différentes valeurs/formes d'au moins un deuxième paramètre de véhicule, dans lequel un premier groupe présente, en comparaison avec un deuxième groupe, des valeurs ou formes différentes de l'au moins un premier paramètre de véhicule et des valeurs ou formes identiques de l'au moins un deuxième paramètre de véhicule.

13. Procédé selon l'une quelconque des revendications précédentes, dans lequel toutes les étapes de travail sont exécutées de manière automatisée, en particulier par un système servant à étalonner une commande d'un composant de véhicule.

14. Programme informatique, qui comprend des instructions, lesquelles, quand elles sont exécutées par un ordinateur, amènent ce dernier à exécuter les étapes d'un procédé (100 ; 200) selon l'une quelconque des revendications 1 à 13.

15. Support lisible par ordinateur, sur lequel est mémorisé un programme informatique selon la revendication 14.

16. Système servant à étalonner une commande d'un composant de véhicule, en particulier d'au moins une section de chaîne cinématique, dans lequel sont enregistrées dans la commande des données de commande, sur la base desquelles le composant de véhicule est commandé, présentant :
une première interface servant à lire des données de commande et une multitude de paramètres de véhicule de variantes déjà étalonnées du composant de véhicule et de paramètres de véhicule d'au moins une variante à étalonner ;
une unité de calcul mise au point pour identifier au moins un premier paramètre de véhicule, de préférence une puissance nominale, une valeur d'émission et/ou une spécification de marché, en particulier l'EU, les USA, le JP, une multitude de paramètres de véhicule de variantes déjà étalonnées du composant de véhicule, dans lequel le premier paramètre de véhicule est différent pour des variantes déjà étalonnées différentes, pour contrôler un schéma d'une dépendance à l'au moins un premier paramètre de véhicule d'au moins une partie des données de commande des variantes déjà étalonnées et pour définir, quand un schéma d'une dépendance entre l'au moins un paramètre de véhicule et la partie des données de commande est identifié, une fonction d'étalonnage pour l'au moins une partie des données de commande sur la base d'une relation établie sur la base du schéma avec le premier paramètre de véhicule et pour déterminer des données de commande d'une variante à étalonner du composant de véhicule à l'aide de la fonction d'étalonnage, dans lequel la fonction d'étalonnage est une spécification d'attribution, laquelle attribue à au moins une partie des données de commande une valeur en fonction de la valeur d'au moins un paramètre de véhicule ; et
une deuxième interface servant à envoyer les données de commande définies, en particulier à la commande du composant de véhicule.
